# EUROPEAN PATENT SPECIFICATION

(11) **EP 4 095 779 B1**
(45) Date of publication and mention of the grant of the patent: **22.04.2026**
(21) Application number: 22175463.3
(22) Date of filing: 25.05.2022
(51) Int. Cl.: G06Q 10/08

(54) **INFORMATION MANAGEMENT SYSTEM**
INFORMATIONSVERWALTUNGSSYSTEM
SYSTÈME DE GESTION D'INFORMATIONS

(30) Priority: 28.05.2021 JP 2021090490
(43) Date of publication of application: 30.11.2022
(73) Proprietor: TOYOTA JIDOSHA KABUSHIKI KAISHA, Toyota-shi, Aichi-ken, 471-8571 (JP)
(72) Inventor: ISHII, Masahiko, Toyota-shi, 471-8571 (JP); ASANO, Hidetaka, Toyota-shi, 471-8571 (JP); KONDO, Takuya, Toyota-shi, 471-8571 (JP); SUZUKI, Ryota, Toyota-shi, 471-8571 (JP); KOGA, Keiichi, Toyota-shi, 471-8571 (JP)
(74) Representative: J A Kemp LLP

(56) References cited:
- HEARN MIKE ET AL: "Corda: A distributed ledger", 20 August 2019 (2019-08-20), XP055793739, Retrieved from the Internet <URL:https://www.corda.net/wp-content/uploads/2019/08/corda-technical-whitepaper-August-29-2019.pdf> [retrieved on 20210408]

## Description

### BACKGROUND

### Field

The present disclosure relates to an information management system that manages information based on a distributed ledger technology.

### Description of the Background Art

Japanese Patent Laying-Open No. 2009-70257 discloses an information management system that manages information on a chemical substance contained in a component traded in a supply chain including an end product manufacturer and a supplier that supplies components to the end product manufacturer. This information management system is connected to a supplier terminal used by the supplier and another supplier terminal used by another supplier over a network. Another supplier supplies the supplier with a sub-component included in a component delivered by the supplier to the end product manufacturer. The supplier requests another supplier to disclose information on a chemical substance contained in the sub-component for giving information on the chemical substance contained in the component to the end product manufacturer.

In this information management system, when a supplier is unable to obtain information on a chemical substance contained in a sub-component from another supplier, an end product manufacturer reads contact information of another supplier or obtains the contact information of another supplier from the supplier to urge another supplier to provide information on the chemical substance contained in the sub-component. For example, when a company scale is large in the order of the end product manufacturer, another supplier, and the supplier, another supplier may not respond to a request for information from the supplier but may respond to a request for information from the end product manufacturer.

In the information management system, an electronic mail, telephone, or facsimile is used for communication among the end product manufacturer, the supplier, and another supplier.

Mike Hearn et al.: "Corda: A distributed ledger" 20 August 2019 discloses a decentralized database platform.

### SUMMARY

In the information management system disclosed in Japanese Patent Laying-Open No. 2009-70257, information may directly be exchanged between the end product manufacturer and another supplier (for example, a material manufacturer) without the supplier (for example, a component manufacturer) being interposed, which means that the end product manufacturer knows a source of sub-components of the supplier. From a point of view of the supplier, the supplier may not want the end product manufacturer to know the source of the sub-components.

Such means for communication as an electronic mail, telephone, or facsimile requires a long time and a large number of man-hours for making a request for disclosing information on a chemical substance and for receiving an answer thereto.

The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes. The present disclosure was made to solve the problem above, and an object of the present disclosure is to provide in a supply chain, an information management system capable of quick information conveyance while confidentiality of information is secured.
(1) An information management system according to one aspect of the present disclosure is an information management system that manages information on a chemical substance contained in a product distributed in a supply chain with a distributed ledger technology. This information management system includes a first apparatus of a first company that manufactures a first product, a second apparatus of a second company that supplies to the first company, a second product included in the first product, a third apparatus of a third company that supplies to the second company, a third product included in the second product, and a network over which the first apparatus, the second apparatus, and the third apparatus are connected. The first apparatus, the second apparatus, and the third apparatus include a first distributed ledger, a second distributed ledger, and a third distributed ledger, respectively. The first distributed ledger and the second distributed ledger share transaction data including information on a chemical substance contained in the second product. The second distributed ledger and the third distributed ledger share transaction data including information on a chemical substance contained in the third product. The first distributed ledger and the third distributed ledger do not share transaction data.

According to the configuration, transaction data including information on a chemical substance contained in the third product is shared between the second distributed ledger and the third distributed ledger and transaction data including information on a chemical substance contained in the second product is shared between the first distributed ledger and the second distributed ledger. Thus, the information on the chemical substance contained in the third product that should be disclosed by the third apparatus to the second apparatus is appropriately shared between the second apparatus and the third apparatus. In addition, the information on the chemical substance contained in the second product that should be disclosed by the second apparatus to the first apparatus is appropriately shared between the first apparatus and the second apparatus.

The first distributed ledger and the third distributed ledger do not share transaction data. Transaction data includes information on a sender or the like. Thus, information about the third company can be kept secret to the first company.

Information on the chemical substance contained in the product is managed based on the distributed ledger technology, so that information is quickly conveyed among apparatuses of companies. Therefore, information on the chemical substance contained in the product distributed in the supply chain can be conveyed more quickly, for example, than in management by using such means for communication as an electronic mail, telephone, or facsimile.

(2) Each of the first apparatus, the second apparatus, and the third apparatus is configured to be able to select a destination of transaction data. Transaction data transmitted by the first apparatus to the second apparatus and transaction data transmitted by the second apparatus to the first apparatus are stored in the first distributed ledger and the second distributed ledger. Transaction data transmitted by the second apparatus to the third apparatus and transaction data transmitted by the third apparatus to the second apparatus are stored in the second distributed ledger and the third distributed ledger.

According to the configuration, the first distributed ledger of the first apparatus does not share transaction data transmitted by the second apparatus to the third apparatus and transaction data transmitted by the third apparatus to the second apparatus. Therefore, sharing of the information on the third company with the first company can be suppressed.

(3) Each of the first distributed ledger, the second distributed ledger, and the third distributed ledger includes a list showing a chemical substance managed in the information management system. The first apparatus is configured to transmit transaction data that requests for addition of a new chemical substance to the list of the second distributed ledger as first request data to the second apparatus.

According to the configuration, each of the first apparatus, the second apparatus, and the third apparatus can request another apparatus to add a chemical substance to be managed in the information management system. This request is shared between/among the apparatuses based on the distributed ledger technology. Therefore, the request can be shared between/among the apparatuses more quickly, for example, than in sharing of the request by using such means for communication as an electronic mail, telephone, or facsimile.

(4) The second apparatus verifies the first request data, using an electronic signature put to the first request data, determines whether or not to add the new chemical substance to the list of the second distributed ledger based on a result of verification of the first request data. When the new chemical substance is added to the list of the second distributed ledger, the second apparatus transmits transaction data including information on the new chemical substance contained in the second product to the first apparatus.

According to the configuration, by adding the new chemical substance to the list, the first apparatus and the second apparatus can quickly share the information on the new chemical substance contained in the second product based on the distributed ledger technology.

(5) In one embodiment, when the new chemical substance is added to the list and when the second apparatus has not received from the third apparatus, information on the new chemical substance contained in the third product, the second apparatus transmits to the third apparatus, transaction data including a request for disclosing the information on the new chemical substance contained in the third product.

According to the configuration, the second apparatus can quickly transmit the request for disclosing the information on the new chemical substance to the third apparatus based on the distributed ledger technology.

(6) In one embodiment, when the second apparatus receives from the third apparatus, information on the new chemical substance contained in the third product, the second apparatus transmits to the first apparatus, transaction data including the information on the new chemical substance contained in the second product.

According to the configuration, the information on the new chemical substance can quickly be shared between the apparatuses based on the distributed ledger technology.

(7) In one embodiment, when the new chemical substance is added to the list, the third apparatus transmits to the second apparatus, transaction data including information on the new chemical substance contained in the third product.

According to the configuration, by adding the new chemical substance to the list, the second apparatus and the third apparatus can quickly share the information on the new chemical substance contained in the third product based on the distributed ledger technology.

(8) In one embodiment, the information management system further includes a fourth apparatus of a fourth company that supplies a fourth product included in the second product to the second company. The fourth apparatus includes a fourth distributed ledger where transaction data including information on a chemical substance contained in the fourth product is held. The second distributed ledger and the fourth distributed ledger share the transaction data including the information on the chemical substance contained in the fourth product. Transaction data transmitted by the second apparatus to the fourth apparatus and transaction data transmitted by the fourth apparatus to the second apparatus are stored in the second distributed ledger and the fourth distributed ledger. In addition of the new chemical substance to the list, when the second apparatus receives first transaction data including information on the new chemical substance contained in the third product, the second apparatus transmits to the first apparatus, second transaction data that includes the information, updated based on the first transaction data, on the new chemical substance contained in the second product, and when the second apparatus receives third transaction data including information on the new chemical substance contained in the fourth product, the second apparatus transmits to the first apparatus, fourth transaction data that includes the information, updated based on the third transaction data, on the new chemical substance contained in the second product.

According to the configuration, when the second apparatus obtains any of the information on the new chemical substance contained in the third product and the information on the new chemical substance contained in the fourth product, the second apparatus transmits to the first apparatus as a partially completed report, the information on the new chemical substance contained in the second product that is updated based on the obtained information. The first company may desire to successively receive reports when some reports are ready, even though data is not complete data including both of the information on the new chemical substance contained in the third product and the information on the new chemical substance contained in the fourth product. By giving the partially completed report before both of pieces of data are ready, the first company can successively receive reports on chemical substances contained in the second product.

(9) In one embodiment, when the second apparatus transmits to the first apparatus, the transaction data that includes the information on the new chemical substance contained in the second product and is updated based on both of the information on the new chemical substance contained in the third product and the information on the new chemical substance contained in the fourth product, the second apparatus transmits to the first apparatus, transaction data indicating completion of a report on the second product to the first apparatus.

According to the configuration, when the complete report including the information on the new chemical substance contained in the second product is given, transaction data indicating completion of the report is sent to the first apparatus. Therefore, the first apparatus can recognize that it has received all reports on the new chemical substance.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing a schematic configuration of an information management system according to an embodiment.
Fig. 2 is a diagram for illustrating business relation among companies in a supply chain.
Fig. 3 is a diagram schematically showing a hardware configuration of an information management apparatus.
Fig. 4 is a conceptual diagram for illustrating a distributed ledger.
Fig. 5 is a diagram for illustrating a case of update of a restriction list.
Fig. 6 is a diagram for illustrating an exemplary process for updating the restriction list.
Fig. 7 is a diagram for illustrating a case of registration of an inquiry.
Fig. 8 is a diagram for illustrating a case of registration of information on a new product.
Fig. 9 is a functional block diagram of a controller (node) relating to a function to update the restriction list.
Fig. 10 is a functional block diagram of the controller (node) relating to an inquiry function and an answer function.
Fig. 11 is a sequence diagram (No. 1) showing a flow of propagation of a request for addition of a subject substance to the restriction list.
Fig. 12 is a sequence diagram (No. 2) showing a flow of propagation of a request for addition of a subject substance to the restriction list.
Fig. 13 is a sequence diagram (No. 3) showing a flow of propagation of a request for addition of a subject substance to the restriction list.
Fig. 14 is a sequence diagram showing a flow of an inquiry and an answer.
Fig. 15 is a sequence diagram (No. 1) showing a flow of registration of a new product.
Fig. 16 is a sequence diagram (No. 2) showing a flow of registration of a new product.

### DESCRIPTION OF THE PREFERRED EMBODIMENTS

An embodiment of the present disclosure will be described in detail below with reference to the drawings. The same or corresponding elements in the drawings have the same reference characters allotted and description thereof will not be repeated.

### <Overall Configuration of Information Management System>

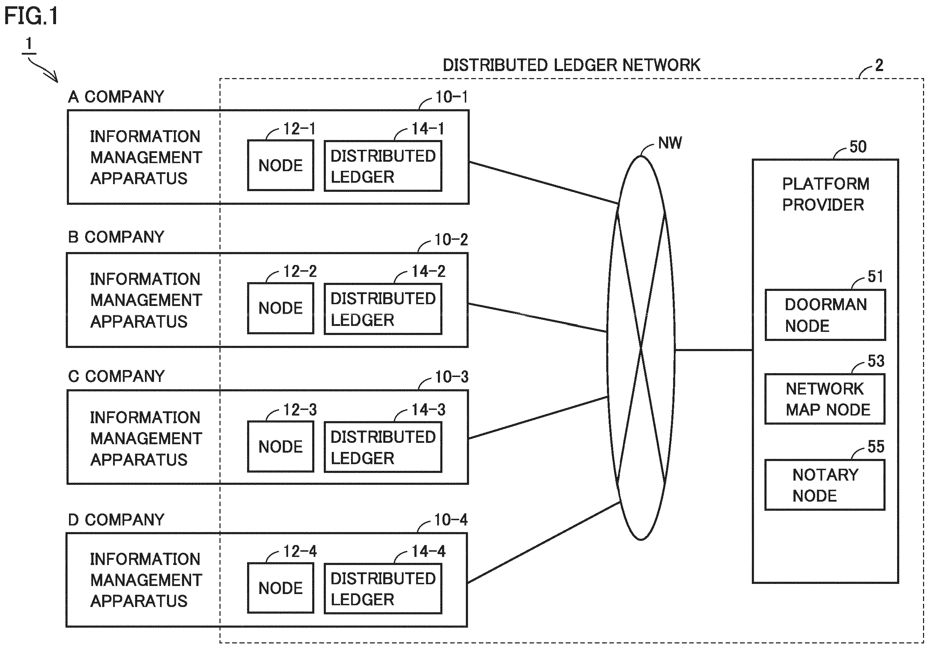

Fig. 1 is a diagram showing a schematic configuration of an information management system 1 according to the present embodiment. Information management system 1 according to the present embodiment is a system that manages, based on a distributed ledger technology, information on a specific chemical substance (which is also referred to as a "subject substance" below) contained in a product (including a component, a raw material, and the like) distributed in a supply chain including a plurality of companies. In the present embodiment, by way of example, a supply chain including four companies (for example, an A company, a B company, a C company, and a D company) is assumed. In information management system 1, the subject substance is a chemical substance to be reported to a downstream company in the supply chain. The subject substance includes, for example, a chemical substance designated as a substance of very high concern (SVHC) as a highly harmful substance under the REACH regulation and/or a chemical substance designated in a global automotive declarable substance list (GADSL) which is a chemical substance list managed worldwide. The chemical substance designated as the SVHC and/or the chemical substance designated in the GADSL are/is also referred to as a "restricted substance" below. The restricted substance may include a chemical substance and the like designated under other laws and regulations. Furthermore, a company that participates in information management system 1 can also have an arbitrary chemical substance included as a subject substance. In other words, the subject substance managed in information management system 1 may include a restricted substance and a chemical substance arbitrarily designated by a participating company.

Information management system 1 includes an information management apparatus 10-1 belonging to the A company, an information management apparatus 10-2 belonging to the B company, an information management apparatus 10-3 belonging to the C company, an information management apparatus 10-4 belonging to the D company, and a platform provider 50. In the present embodiment, the A company is an end product manufacturer and falls under what is called a "downstream company" in the supply chain. In the present embodiment, the B company is a component manufacturer and falls under what is called a "midstream company" in the supply chain. In the present embodiment, the C company and the D company are material manufacturers and fall under what is called "upstream companies" in the supply chain.

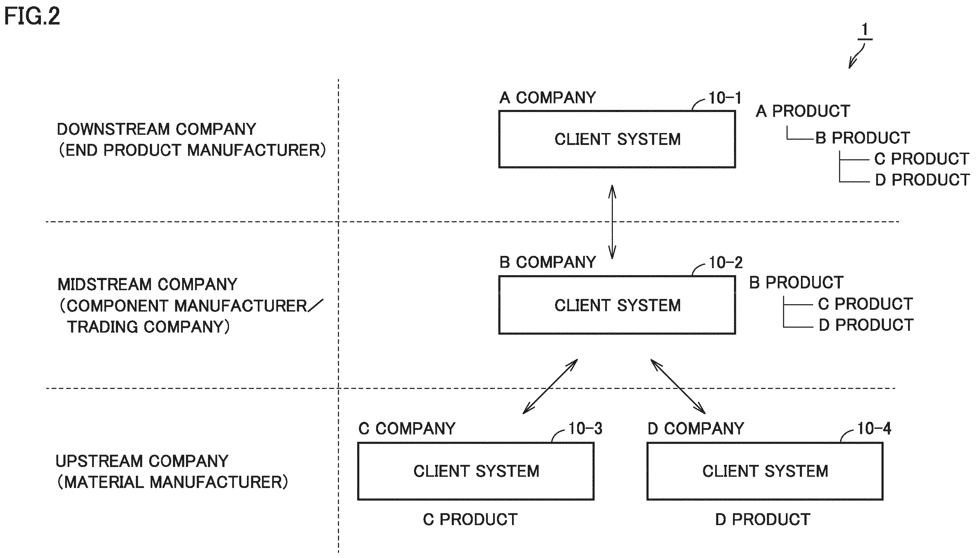

Fig. 2 is a diagram for illustrating business relation among companies in the supply chain. The C company supplies a C product which is its product to the B company. The D company supplies a D product which is its product to the B company. The B company manufactures a B product which is its product from the C product purchased (supplied) from the C company and the D product purchased from the D company, and supplies the B product to the A company. The A company manufactures an A product which is its product from the product purchased from the B company and sells the A product to an end user. The A company may be, for example, an automaker.

The midstream company may include a trading company. A trading company may be interposed, for example, between the A company and the B company, between the B company and the C company, and/or between the B company and the D company.

Each company is required to manage information on a subject substance contained in a product sold by that company itself. Information on the subject substance contained in a purchased product is disclosed to each company by an upstream company in the supply chain, and each company manages information on the subject substance contained in a product sold thereby. For example, the A company receives from the B company, information on the subject substance contained in the B product, and based on that information, the A company manages the information on the subject substance contained in the A product.

In information management system 1 according to the present embodiment, information is conveyed only between companies in direct business relation. For example, a downstream company (the A company) and a midstream company (the B company) in supply-demand relation of products are in direct business relation. A midstream company (the B company) and an upstream company (the C company and the D company) in supply-demand relation of products are in direct business relation. On the other hand, a downstream company (the A company) and an upstream company (the C company and the D company) are not in direct business relation. In other words, information is conveyed between the downstream company (the A company) and the midstream company (the B company) and between the midstream company (the B company) and the upstream company (the C company and the D company), whereas information is not conveyed between the downstream company (the A company) and the upstream company (the C company and the D company). For example, when an E company which is a trading company is interposed between the A company and the B company, information is conveyed between the A company and the E company and between the E company and the B company, whereas information is not conveyed between the A company and the B company.

For example, when trade of the C product is started between the B company and the C company, information on the subject substance contained in the C product is provided from the C company to the B company. Though detailed description will be given later, the C company may voluntarily provide information on the subject substance contained in the C product to the B company, or the C company may provide that information to the B company in response to a request from the B company. This is also applicable to information provided between the A company and the B company and between the B company and the D company. When trade of the D product is started between the B company and the D company, the D company provides information on the subject substance contained in the D product to the B company. When trade of the B product is started between the A company and the B company, the B company provides information on the subject substance contained in the B product to the A company. Each company thus receives information on the subject substance contained in a purchased product from an upstream company in direct business relation and manages information on the subject substance contained in its product including the purchased product. Information is conveyed between companies over a distributed ledger network 2 (Fig. 1) including information management apparatuses 10-1 to 10-4.

Referring again to Fig. 1, distributed ledger platform software has been installed in each of information management apparatuses 10-1 to 10-4. The distributed ledger platform includes smart contract that allows limitation of a range where transaction data is shared to a range between concerned parties. Therefore, distributed ledgers 14-1 to 14-4 of information management apparatuses 10-1 to 10-4 hold transaction data that are different from one another. Details of distributed ledgers 14-1 to 14-4 will be described later. For example, CORDA^{®} may be adopted as the distributed ledger platform.

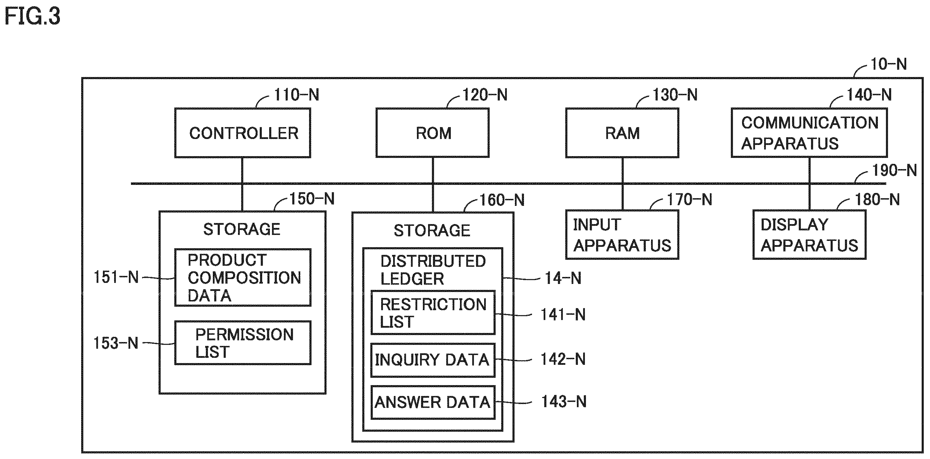

As the installed distributed ledger platform software functions, controllers 110-1 to 110-4 (Fig. 3 which will be described later) included in information management apparatuses 10-1 to 10-4 function as nodes 12-1 to 12-4, respectively. Communication among nodes 12-1 to 12-4 over a network NW forms distributed ledger network 2. Information management apparatuses 10-1 to 10-4 are basically similar in configuration to one another. Therefore, when information management apparatuses 10-1 to 10-4 are not particularly distinguished from one another, they may be denoted as an "information management apparatus 10-N." Nodes 12-1 to 12-4 may also be denoted as a "node 12-N" when they are not particularly distinguished from one another.

Distributed ledger network 2 in information management system 1 is a consortium/private network. Platform provider 50 functions as a manager of distributed ledger network 2. Platform provider 50 includes a doorman node 51, a network map node 53, and a notary node 55.

Doorman node 51 approves an application for participation from node 12-N that desires participation into distributed ledger network 2. Doorman node 51 issues a certificate to node 12-N. Node 12-N that participates in distributed ledger network 2 creates a pair of a secret key and a public key at the time of initial start-up and transmits a request for grant of the certificate to doorman node 51. Doorman node 51 verifies an ID or the like of node 12-N and issues the certificate.

Information (for example, an IP address) of registered node 12-N is stored in network map node 53. Network map node 53 functions as a domain name system (DNS) in distributed ledger network 2. Nodes 12-1 to 12-4 that form distributed ledger network 2 recognize a destination of transaction data, for example, based on information provided from network map node 53.

Notary node 55 verifies transaction data proposed by node 12-N and puts a signature to the transaction data. As notary node 55 puts the signature to the transaction data, finality is given to the transaction data. Timing when notary node 55 puts the signature to the transaction data can be set as appropriate depending on specifications of the distributed ledger platform. For example, timing when notary node 55 puts the signature to the transaction data may be after a transaction data sender node puts the signature to the transaction data or after both of a transaction data sender node and a transaction data destination node put the signature to the transaction data.

Node 12-N generates transaction data. As the distributed ledger platform software functions as described above, controller 110-N (Fig. 3) included in information management apparatus 10-N functions as node 12-N.

Fig. 3 is a diagram schematically showing a hardware configuration of information management apparatus 10-N. Information management apparatus 10-N is a computing apparatus including, for example, a server apparatus and a personal computer (PC). Information management apparatus 10-N includes a controller 110-N, a read only memory (ROM) 120-N, a random access memory (RAM) 130-N, a communication apparatus 140-N, a storage 150-N, a storage 160-N, an input apparatus 170-N, and a display apparatus 180-N. Controller 110-N, ROM 120-N, RAM 130-N, communication apparatus 140-N, storage 150-N, storage 160-N, input apparatus 170-N, and display apparatus 180-N are connected to a bus 190-N.

Controller 110-N is implemented, for example, by an integrated circuit including a central processing unit (CPU). Controller 110-N develops various programs stored in ROM 120-N on RAM 130-N and executes the programs. The various programs include, for example, distributed ledger platform software. RAM 130-N functions as a working memory, and various types of data necessary for execution of the various programs are temporarily stored in RAM 130-N. Controller 110-N functions as node 12-N in distributed ledger network 2 by executing the distributed ledger platform software. At the time of initial start-up as node 12-N, controller 110-N generates a secret key and a public key in conformity with a prescribed standard. The public key is sent, for example, to network map node 53 of platform provider 50. Controller 110-N performs a function to generate transaction data. Controller 110-N generates an electronic signature by using the secret key and puts the electronic signature to the transaction data. Controller 110-N performs a function to approve transaction data proposed by another node. Controller 110-N verifies the transaction data proposed by another node, and when it sees no problem in a result of verification, it puts the electronic signature to the transaction data and sends the transaction data back to another node.

Communication apparatus 140-N is configured to communicate with external equipment. The external equipment includes, for example, another information management apparatus included in distributed ledger network 2 and platform provider 50. Communication apparatus 140-N and the external equipment communicate with each other over the Internet, a wide area network (WAN), a local area network (LAN), an Ethernet^{®} network, a public network, a private network, a wired network or a wireless network, or combination thereof. Examples of the external equipment include a server apparatus in an external group that publishes a restricted substance on the Internet. For example, controller 110-N monitors whether or not a new restricted substance has been added by obtaining information on the restricted substance from the server apparatus in the external group in a prescribed cycle through communication apparatus 140-N.

Input apparatus 170-N includes an input device. The input device is, for example, a mouse, a keyboard, a touch panel, and/or another apparatus that can accept an operation by a user.

Display apparatus 180-N includes a display. Display apparatus 180-N shows various images on the display in accordance with a control signal from controller 110-N. The display is, for example, a liquid crystal display, an organic electroluminescence (EL) display, or another display device.

Storage 150-N includes a storage medium such as a hard disk or a flash memory. Information stored in storage 150-N is managed off-chain (on the outside of distributed ledger network 2). Product composition data 151-N of a company's product and a permission list 153-N are stored in storage 150-N. For example, in information management apparatus 10-1 of the A company, product composition data 151-1 includes composition data of the A product. For example, in information management apparatus 10-2 of the B company, product composition data 151-2 includes composition data of the B product. For example, in information management apparatus 10-3 of the C company, product composition data 151-3 includes composition data of the C product. For example, in information management apparatus 10-4 of the D company, product composition data 151-4 includes composition data of the D product.

Permission list 153-N includes information on a company to which disclosure of information is permitted. Specifically, a downstream company in direct business relation in the supply chain is registered in permission list 153-N. For example, in information management apparatus 10-1 of the A company, no company is registered in a permission list 153-1. For example, in information management apparatus 10-2 of the B company, the A company is registered in a permission list 153-2. For example, in information management apparatus 10-3 of the C company, the B company is registered in a permission list 153-3. For example, in information management apparatus 10-4 of the D company, the B company is registered in a permission list 153-4. No answer is given to an inquiry from a company not registered in permission list 153-N. Permission list 153-1 does not have to be stored in a storage 150-1 of information management apparatus 10-1.

A secret key and a public key generated by controller 110-N are stored in storage 150-N. A certificate issued by doorman node 51 of platform provider 50 is stored in storage 150-N.

Storage 160-N includes a storage medium such as a hard disk or a flash memory. Information stored in storage 160-N is managed on-chain (in the inside of distributed ledger network 2). Distributed ledger 14-N is stored in storage 160-N. Distributed ledger 14-N is, for example, a distributed ledger in a directed acyclic graph (DAG) structure. Transaction data included in distributed ledger 14-N forms a partially ordered data model. Transaction data is data representing a transaction and details thereof will be described later.

Distributed ledger 14-N includes a restriction list 141-N, inquiry data 142-N, and answer data 143-N.

Restriction list 141-N is information on a subject substance, that is, information indicating a chemical substance to be reported to a downstream company in information management system 1. Restriction list 141-N includes information on at least one subject substance. Information on the subject substance includes, for example, a CAS number, a name of a substance, a date of update of restriction, and a report threshold value. The CAS number is an identification number specific to a chemical substance provided in a chemical substance registration system in the Chemical Abstracts Service (CAS) of the American Chemical Society. The name of the substance refers to a name of a subject substance. The date of update of restriction refers to a date on which a subject substance is added to restriction list 141-N (date on which a subject substance is subjected to reporting to a downstream company). When the subject substance falls under the restricted substance, the date of update of restriction may be a date on which restriction is imposed under the laws and regulations etc. (for example, the date of designation as the SVHC). The report threshold value is a threshold value of a ratio (content) of a subject substance contained per unit amount of a product. When a content exceeds the report threshold value, information on the subject substance in that product should be given to a downstream company. When the content is equal to or lower than the report threshold value, information on the subject substance does not have to be given.

For example, when information management apparatus 10-N (node 12-N) of any company senses designation of a new restricted substance as the SVHC, information management apparatus 10-N (node 12-N) generates transaction data that proposes addition of the restricted substance newly designated as the SVHC to restriction list 141-N and transmits the transaction data to an information management apparatus (node) of a company in direct business relation. As both of the nodes that have transmitted and received the transaction data put the signature to the transmitted and received transaction data, the transaction data is added to the distributed ledgers held in the information management apparatuses of both of them. Furthermore, the information management apparatus (node) that has received the transaction data has the transaction data propagate to an information management apparatus (node) of a company in direct business relation therewith so that the transaction data that proposes addition of the restricted substance newly designated as the SVHC to the restriction list is sent to all nodes that form distributed ledger network 2. In other words, information on update of restriction list 141-N is shared among all companies included in information management system 1 (forming distributed ledger network 2) by conveyance of information among companies in direct business relation.

Inquiry data 142-N includes information from a downstream company that shows inquiry contents about a subject substance contained in a product (a product supplied to the downstream company). For example, when processing for making an inquiry is performed by an operation onto input apparatus 170-N, information management apparatus 10-N (node 12-N) generates transaction data representing the contents of processing, and the transaction data is transmitted (proposed) to an information management apparatus (node) of a company to which the inquiry is made. As both of the nodes put the signature to the transaction data, the transaction data is added to the distributed ledgers held in the information management apparatuses of both of them.

Answer data 143-N includes, for example, information on a subject substance (the CAS number, the name of the substance, the content, and the like) contained in a product delivered to a downstream company. Answer data 143-N may be transmitted as an answer to inquiry data 142-N, or may voluntarily be transmitted to the downstream company based on addition of a new subject substance to restriction list 141-N. Answer data 143-1 held in information management apparatus 10-1 of the A company may be, for example, information for disclosing a subject substance contained in the A product to an end user.

For example, when processing for giving an answer to an inquiry is performed by an operation onto input apparatus 170-N or automatic processing by controller 110-N, information management apparatus 10-N (node 12-N) generates transaction data representing the contents of processing, and the transaction data is transmitted (proposed) to an information management apparatus (node) of a company to which the inquiry is made (downstream company). As both of the nodes put the signature to the transaction data, the transaction data is added to the distributed ledgers held in the information management apparatuses of both of them.

Distributed ledger 14-N according to the present embodiment is subjective, and distributed ledgers 14-1 to 14-4 hold pieces of data different from one another. This is because a range within which transaction data is shared is limited to a range between concerned parties as described above.

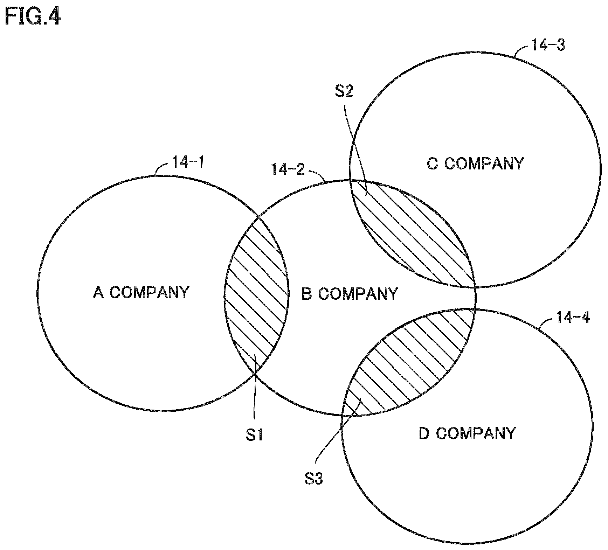

Fig. 4 is a conceptual diagram for illustrating distributed ledger 14-N. Fig. 4 schematically shows relation among distributed ledgers 14-1 to 14-4 stored in respective information management apparatuses 10-1 to 10-4.

Distributed ledger 14-1 and distributed ledger 14-2 share transaction data transmitted and received between information management apparatus 10-1 (node 12-1) of the A company and information management apparatus 10-2 (node 12-2) of the B company (a region S1). In region S1, for example, transaction data on the restriction list transmitted and received between nodes 12-1 and 12-2, transaction data on an inquiry about the restricted substance contained in the B product, and transaction data on an answer to the inquiry are included.

Distributed ledger 14-2 and distributed ledger 14-3 share transaction data transmitted and received between information management apparatus 10-2 (node 12-2) of the B company and information management apparatus 10-3 (node 12-3) of the C company (a region S2). In region S2, for example, transaction data on the restriction list transmitted and received between nodes 12-2 and 12-3, transaction data on an inquiry about the restricted substance contained in the C product, and transaction data on an answer to the inquiry are included.

Distributed ledger 14-2 and distributed ledger 14-4 share transaction data transmitted and received between information management apparatus 10-2 (node 12-2) of the B company and information management apparatus 10-4 (node 12-4) of the D company (a region S3). In region S3, for example, transaction data on the restriction list transmitted and received between nodes 12-2 and 12-4, transaction data on an inquiry about the restricted substance contained in the D product, and transaction data on an answer to the inquiry are included.

For example, from a point of view of the B company which is the midstream company in the supply chain, the B company may not want the A company to grasp information about from which company it purchases the C product and the D product included in the B product. Transaction data includes information on a sender node and a destination node. For example, when transaction data is broadcast to all nodes that form distributed ledger network 2, the A company may know a source of the C product and the D product In information management system 1 in the present embodiment, the range within which transaction data is shared is limited to the range between concerned parties. Therefore, disclosure of information (a company name or the like) on a business partner to a company other than a company in direct business relation can be suppressed.

By performing various functions of information management system 1 while the range within which transaction data is shared is limited to the range between concerned parties, information can quickly be conveyed based on the distributed ledger technology while confidentiality of information is secured. Specific processing in information management system 1 will be described below with reference to three main cases carried out in information management system 1. The three main cases include (1) a case of update of the restriction list, (2) a case of registration of an inquiry, and (3) a case of registration of information on a new product.

### <(1) Case of Update of Restriction List>

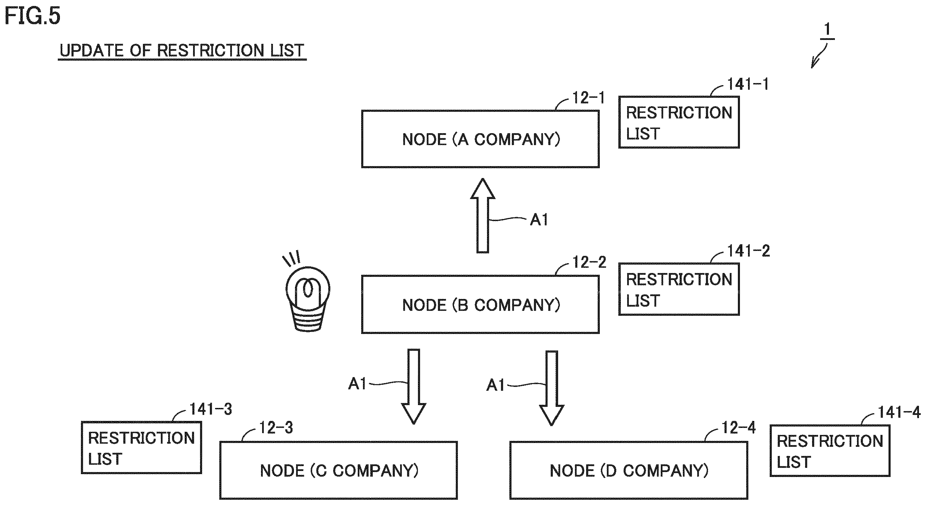

Fig. 5 is a diagram for illustrating a case of update of restriction list 141-N. Update of restriction list 141-N refers to addition of a subject substance to restriction list 141-N. Update of restriction list 141-N may include deletion of a subject substance from restriction list 141-N. Addition of a subject substance to a restriction list 141-1 may be proposed, for example, automatically at the time of determination by information management apparatus 10-N as addition of the restricted substance based on information on the restricted substance obtained from a server apparatus or the like in an external group, or at the time when a user of information management apparatus 10-N enters a request for setting an arbitrary chemical substance as the subject substance through input apparatus 170-N. By way of example, for example, it is assumed that a new restricted substance is added to the SVHC and node 12-2 of the B company first sensed the addition. Processing similar to processing which will be described below is performed also when a user of information management apparatus 10-2 of the B company proposes addition of an arbitrary chemical substance as the subject substance.

Node 12-2 of the B company adds a new restricted substance to a restriction list 141-2 and updates restriction list 141-2. Then, node 12-2 of the B company generates transaction data that proposes addition of the new restricted substance to restriction lists 141-1, 141-3, and 141-4 for adding the new restricted substance as the subject substance also to other restriction lists 141-1, 141-3, and 141-4. Specifically, node 12-2 of the B company generates three pieces of transaction data to be transmitted to node 12-1 of the A company, node 12-3 of the C company, and node 12-4 of the D company in direct business relation, respectively. The transaction data to be transmitted to node 12-1 of the A company includes, for example, information on a sender (the B company) of the transaction data, information on a destination (the A company) of the transaction data, and a type of a transaction, as well as the CAS number, the name of the substance, the date of update of restriction, and the report threshold value. The type of the transaction represents contents proposed by the transaction. The type of the transaction in this case represents "addition of the subject substance." In the transaction data to be transmitted to node 12-3 of the C company and node 12-4 of the D company, information on the destination is changed to node 12-3 of the C company and node 12-4 of the D company as compared with the transaction data to be transmitted to the A company.

Node 12-2 puts the electronic signature to the generated transaction data and transmits the transaction data to other nodes 12-1, 12-3, and 12-4 (an arrow A1). As nodes 12-1, 12-3, and 12-4 approve the received transaction data (proposed transaction data), the transaction data is added to distributed ledgers 14-1 to 14-4. Specifically, when node 12-1 receives the transaction data from node 12-2, it verifies the transaction data. A technique for verification may be, for example, a verification technique using an electronic signature (the electronic signature of the B company) put to the transaction data or other known verification techniques. After node 12-1 finishes verification of contents of the transaction data, node 12-1 puts the electronic signature to the transaction data to approve the transaction data and sends the transaction data back to node 12-2. Nodes 12-1 and 12-2 add the transaction data (the transaction data to which the electronic signatures of both of nodes 12-1 and 12-2 are put) to distributed ledgers 14-1 and 14-2, respectively. As the transaction data is held in distributed ledger 14-1, restriction list 141-1 of the A company is updated. When node 12-1 does not approve the transaction data, the transaction data is not added to distributed ledgers 14-1 and 14-2 and restriction list 141-1 of the A company is not updated.

Similarly, as node 12-3 approves the transaction data from node 12-2, the transaction data is added to distributed ledgers 14-2 and 14-3. As the transaction data is held in distributed ledger 14-3, restriction list 141-3 of the C company is updated.

As node 12-4 approves the transaction data from node 12-2, the transaction data is added to distributed ledgers 14-2 and 14-4. As the transaction data is held in distributed ledger 14-4, restriction list 141-4 of the D company is updated.

When the A company first proposes update of restriction list 141-N, transaction data that proposes update of restriction list 141-N propagates from node 12-1 of the A company to node 12-2 of the B company. Then, node 12-2 of the B company has the transaction data that proposes update of restriction list 141-N propagate to node 12-3 of the C company and node 12-4 of the D company regardless of approval of the transaction data by node 12-2 itself.

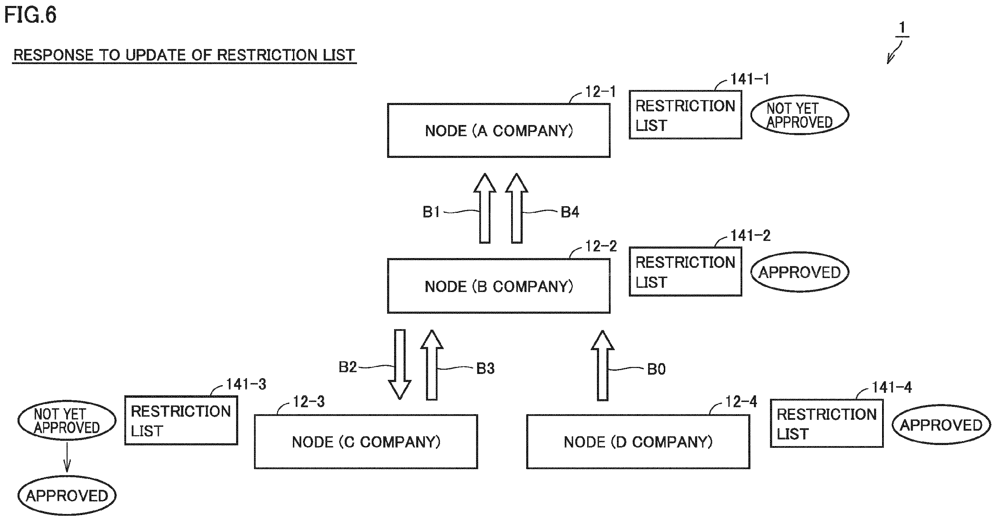

Fig. 6 is a diagram for illustrating an exemplary process for updating restriction list 141-N. As described with reference to Fig. 5, it is assumed that any node 12-N (for example, node 12-2 of the B company) generates transaction data that proposes addition of a subject substance to restriction list 141-N and this transaction data propagates to all nodes. A chemical substance addition of which as the subject substance is proposed is also referred to as a "new subject substance" below.

In the example shown in Fig. 6, the B company and the D company approve proposal for update of restriction list 141-N. The A company and the C company have not approved proposal for update of restriction list 141-N.

Though node 12-4 of the D company has not received an inquiry about a new subject substance from node 12-2 of the B company, being triggered by approval of the proposal for update of restriction list 141-4, it reports to node 12-2 of the B company, composition data of the D product to which information on the new subject substance has been added (an arrow B0). Specifically, as node 12-4 of the D company approves the proposal for update of restriction list 141-4, it uses product composition data 151-4 to prepare composition data of the D product to which information on the new subject substance has been added as answer data 143-4. Then, node 12-4 of the D company transmits transaction data reporting prepared answer data 143-4 to node 12-2 of the B company.

Node 12-2 of the B company verifies the transaction data that reports answer data 143-4 received from node 12-4 of the D company, and thereafter when node 12-2 sees no problem in a result of verification of the transaction data, node 12-2 approves the transaction data. Contents in answer data 143-4 are thus held in distributed ledger 14-2 of the B company as answer data 143-2. Node 12-2 of the B company uses information on the new subject substance contained in the D product included in the composition data of the D product to update product composition data 151-2 of the B product.

Though node 12-2 of the B company has not received an inquiry about the new subject substance from node 12-1 of the A company, it reports composition data of the B product to which information on the new subject substance has been added to node 12-1 of the A company, because it has approved the proposal for update of restriction list 141-2. Node 12-2 of the B company prepares as answer data 143-2, composition data of the B product on which information on the new subject substance contained in the D product has been reflected. This answer data 143-2 does not include information for identifying the D company. Node 12-2 of the B company transmits transaction data reporting prepared answer data 143-2 to node 12-1 of the A company (an arrow B1). Since information on the new subject substance contained in the C product is not reflected on this answer data 143-2, node 12-2 of the B company gives answer data 143-2 as a partially completed report to node 12-1 of the A company.

Node 12-1 of the A company verifies the transaction data received from node 12-2 of the B company, and thereafter when node 12-1 sees no problem in a result of verification of the transaction data, node 12-1 approves the transaction data. Contents in answer data 143-2 are thus held in distributed ledger 14-1 of the A company as answer data 143-1.

Since node 12-3 of the C company has not approved the proposal for update of restriction list 141-N, it has not transmitted to the B company, composition data of the C product to which information on the new subject substance has been added. When node 12-2 of the B company recognizes that it has not yet obtained the composition data of the C product to which information on the new subject substance had been added from node 12-3 of the C company, it prepares inquiry data 142-2 for obtaining the composition data of the C product to which information on the new subject substance had been added, and transmits transaction data requesting for an answer to contents in inquiry data 142-2 to node 12-3 of the C company (an arrow B2). At this time, node 12-2 of the B company does not make an inquiry to node 12-4 of the D company from which it has already obtained the composition data of the D product to which information on the new subject substance had been added.

Node 12-3 of the C company verifies the transaction data received from node 12-2 of the B company, and thereafter when node 12-3 sees no problem in a result of verification of the transaction data, node 12-3 approves the transaction data. Contents in inquiry data 142-2 are thus held in distributed ledger 14-3 of the C company as inquiry data 142-3. For example, a manager or a user of information management apparatus 10-3 considers disclosure of information on the new subject substance. When determination that there is no problem in disclosure of information on the new subject substance is made as a result of consideration, the manager or the user of information management apparatus 10-3 performs an operation to approve update of restriction list 141-3. As update of restriction list 141-3 is approved, node 12-3 of the C company uses product composition data 151-3 to prepare as answer data 143-3, composition data of the C product to which information on the new subject substance has been added. Then, node 12-3 of the C company transmits transaction data reporting prepared answer data 143-3 to node 12-2 of the B company (an arrow B3).

Node 12-2 of the B company verifies the transaction data received from node 12-3 of the C company, and thereafter when node 12-2 sees no problem in a result of verification of the transaction data, node 12-2 approves the transaction data. Contents in answer data 143-3 are thus held in distributed ledger 14-2 of the B company as answer data 143-2. Node 12-2 of the B company uses information on the new subject substance contained in the C product to update product composition data 151-2 of the B product. Then, for reporting to the A company, composition data of the B product on which information on the new subject substance contained in the C product has been reflected is prepared as answer data 143-2. On this answer data 143-2, information on the subject substance contained in both of the C product and the D product included in the B product is reflected. Therefore, node 12-2 of the B company finalizes prepared answer data 143-2 as a complete report and transmits the transaction data reporting prepared answer data 143-2 to node 12-1 of the A company (an arrow B4). This answer data 143-2 does not include information for identifying the C company and the D company.

Node 12-1 of the A company verifies the transaction data received from node 12-2 of the B company, and thereafter when node 12-1 sees no problem in a result of verification of the transaction data, node 12-1 approves the transaction data. Contents in answer data 143-2 are thus held in distributed ledger 14-1 of the A company as answer data 143-1.

When node 12-2 of the B company finishes the complete report to node 12-1 of the A company that has responded to update of restriction list 141-2, it sets a completion flag. Then, node 12-2 of the B company transmits transaction data indicating completion of the complete report about update of restriction list 141-2 to node 12-1 of the A company. Node 12-1 of the A company verifies the transaction data received from node 12-2 of the B company, and thereafter when node 12-1 sees no problem in a result of verification of the transaction data, node 12-1 approves the transaction data. Processing for update of restriction list 141-N is thus completed.

### <(2) Case of Registration of Inquiry>

An inquiry is made from a downstream company in the supply chain to an upstream company in direct business relation. The downstream company can make an inquiry about a composition of a purchased product to the upstream company in direct business relation at arbitrary timing. An inquiry is registered, for example, when no report has been made about a subject substance included in restriction list 141-N. For example, a scene where some company has not approved update of restriction list 141-N in the supply chain is assumed. A case in which an inquiry about the B product is made from the A company to the B company will be described by way of example.

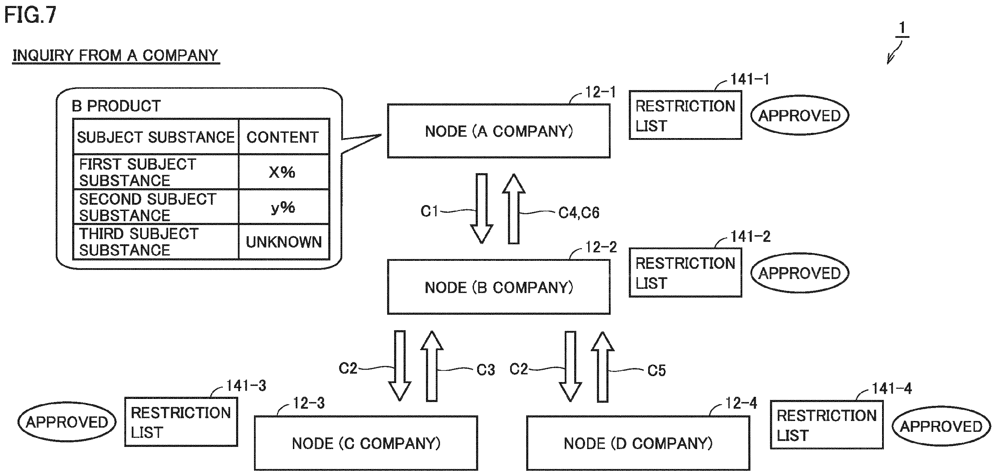

Fig. 7 is a diagram for illustrating a case of registration of an inquiry. In Fig. 7, an inquiry about the B product from the A company to the B company is made. It is assumed that the subject substance contained in the B product has been approved by all nodes 12-1 to 12-4 and registered in restriction lists 141-1 to 141-4. The subject substance contained in the B product includes first to third subject substances. The A company has received a report about composition data (a content here) of the first subject substance and the second subject substance in connection with the B product, whereas it has not received a report about composition data of the third subject substance.

Initially, node 12-1 of the A company checks whether or not the third subject substance which is an inquiry purpose is included in restriction list 141-1, and when the third subject substance is not included in restriction list 141-1, node 12-1 performs above-described processing (processing for update of the restriction list) for adding the third subject substance to restriction list 141-1. When node 12-1 of the A company confirms that the third subject substance which is the inquiry purpose is included in restriction list 141-1, node 12-1 of the A company prepares inquiry data 142-1 for making an inquiry about the B product to node 12-2 of the B company, and generates transaction data that requests for an answer to contents of inquiry data 142-1. The transaction data includes, for example, information on a sender (the A company) of the transaction data, information on a destination (the B company) of the transaction data, a type of a transaction, model number information for identifying the B product, and the inquiry purpose. The type of the transaction represents a "request for disclosure of the composition." The model number information for identifying the B product may be, for example, model number information for managing the B product in the B company. For example, a table of correspondence between model number information for managing the B product in the A company and model number information for managing the B product in the B company may be prepared in advance, and the user in the A company may be able to enter model number information for managing the B product in the A company at the time of preparation of inquiry information. For example, input model number information for managing the B product in the A company may be converted to model number information for node 12-1 to manage the B product in the B company and the model number information may be included in transaction data. The inquiry purpose may be selected, for example, from the "content" and "presence/absence". When the "content" is selected as the inquiry purpose, the content for each subject substance contained in the B product is given as an answer to the inquiry, for example, in a form of a list. Alternatively, when "presence/absence" is selected as the inquiry purpose, all subject substances contained in the B product are given as an answer to the inquiry, for example, in a form of a list. Node 12-1 of the A company transmits generated transaction data to node 12-2 of the B company (an arrow C1).

Node 12-2 of the B company verifies the transaction data received from node 12-1 of the A company, and thereafter when node 12-2 sees no problem in a result of verification of the transaction data, node 12-2 approves the transaction data. Contents in inquiry data 142-1 are thus held in distributed ledger 14-2 of the B company as inquiry data 142-2. Node 12-2 of the B company prepares inquiry data 142-2 that makes an inquiry about the C product included in the B product and generates transaction data that requests for an answer to contents in inquiry data 142-2. Node 12-2 of the B company prepares inquiry data 142-2 that makes an inquiry about the D product included in the B product and generates transaction data that requests for an answer to contents of inquiry data 142-2. The transaction data that makes an inquiry about the C product includes, for example, information on a sender (the B company) of the transaction data, information on a destination (the C company) of the transaction data, a type of a transaction, model number information for identifying the C product, and an inquiry purpose. The transaction data that makes an inquiry about the D product includes, for example, information on a sender (the B company) of the transaction data, information on a destination (the D company) of the transaction data, a type of a transaction, model number information for identifying the D product, and an inquiry purpose. Node 12-2 of the B company transmits the transaction data for making an inquiry about the C product and the transaction data that makes an inquiry about the D product to node 12-3 of the C company and node 12-4 of the D company, respectively (an arrow C2).

Node 12-3 of the C company verifies the transaction data received from node 12-2 of the B company, and thereafter when node 12-3 sees no problem in a result of verification of the transaction data, node 12-3 approves the transaction data. Contents in inquiry data 142-2 are thus held in distributed ledger 14-3 of the C company as inquiry data 142-3. Since there is no company upstream from the C company itself in connection with the C product, node 12-3 of the C company prepares composition data of the C product as answer data 143-3. Then, node 12-3 of the C company transmits transaction data reporting prepared answer data 143-3 to node 12-2 of the B company (an arrow C3).

Node 12-2 of the B company verifies the transaction data received from node 12-3 of the C company, and thereafter when node 12-2 sees no problem in a result of verification of the transaction data, node 12-2 approves the transaction data. Contents in answer data 143-3 are thus held in distributed ledger 14-2 of the B company as answer data 143-2. Node 12-2 of the B company uses information on the subject substance contained in the C product to update product composition data 151-2 of the B product. Then, for reporting to the A company, node 12-2 prepares as answer data 143-2, composition data of the B product on which information on the subject substance contained in the C product is reflected. This answer data 143-2 does not include information for identifying the C company. Node 12-2 of the B company transmits transaction data reporting prepared answer data 143-2 to node 12-1 of the A company (an arrow C4). Since information on the subject substance contained in the D product is not reflected on this answer data 143-2, node 12-2 of the B company transmits this answer data 143-2 to node 12-1 of the A company as the partially completed report. Node 12-1 of the A company verifies the transaction data received from node 12-2 of the B company, and thereafter when node 12-1 sees no problem in a result of verification of the transaction data, node 12-1 approves the transaction data. Contents in answer data 143-2 are thus held in distributed ledger 14-1 of the A company as answer data 143-1.

Node 12-4 of the D company verifies the transaction data received from node 12-2 of the B company, and thereafter when node 12-4 sees no problem in a result of verification of the transaction data, node 12-4 approves the transaction data. Contents in inquiry data 142-2 are thus held in distributed ledger 14-4 of the D company as inquiry data 142-4. Since there is no company upstream from the D company itself in connection with the D product, node 12-4 of the D company prepares composition data of the D product as answer data 143-4. Then, node 12-4 of the D company transmits transaction data reporting prepared answer data 143-4 to node 12-2 of the B company (an arrow C5).

Node 12-2 of the B company verifies the transaction data received from node 12-4 of the D company, and thereafter when node 12-2 sees no problem in a result of verification of the transaction data, node 12-2 approves the transaction data. Contents in answer data 143-4 are thus held in distributed ledger 14-2 of the B company as answer data 143-2. Node 12-2 of the B company uses information on the subject substance contained in the D product to update product composition data 151-2 of the B product. Then, for reporting to the A company, node 12-2 prepares as answer data 143-2, composition data of the B product on which information on the subject substance contained in the D product is reflected. On this answer data 143-2, information on the subject substance contained in both of the C product and the D product included in the B product is reflected. Therefore, node 12-2 of the B company finalizes prepared answer data 143-2 as a complete report and transmits transaction data reporting prepared answer data 143-2 to node 12-1 of the A company (an arrow C6). This answer data 143-2 does not include information for identifying the C company and the D company.

Node 12-1 of the A company verifies the transaction data received from node 12-2 of the B company, and thereafter when node 12-1 sees no problem in a result of verification of the transaction data, node 12-1 approves the transaction data. Contents in answer data 143-2 are thus held in distributed ledger 14-1 of the A company as answer data 143-1.

When node 12-2 of the B company finishes the complete report about the inquiry from node 12-1 of the A company, it sets a completion flag. Then, node 12-2 of the B company transmits transaction data indicating completion of the complete report about the inquiry to node 12-1 of the A company. Node 12-1 of the A company verifies the transaction data received from node 12-2 of the B company, and thereafter when node 12-1 sees no problem in a result of verification of the transaction data, node 12-1 approves the transaction data. A series of processing from an inquiry to an answer is thus completed.

### <(3) Case of Registration of Information on New Product>

When a new product is released, information management apparatus 10-N of a company that releases the new product adds composition data of the new product to product composition data 151-N. When node 12-N senses addition of the composition data of the new product to product composition data 151-N, node 12-N obtains the composition data of the product from a node of an upstream company from which a product included in the new product is purchased, and prepares composition data of the new product. Then, node 12-N provides information on the subject substance contained in the new product to a node of a downstream company to which the new product is supplied. A case of addition of the new product by the B company will be described by way of example.

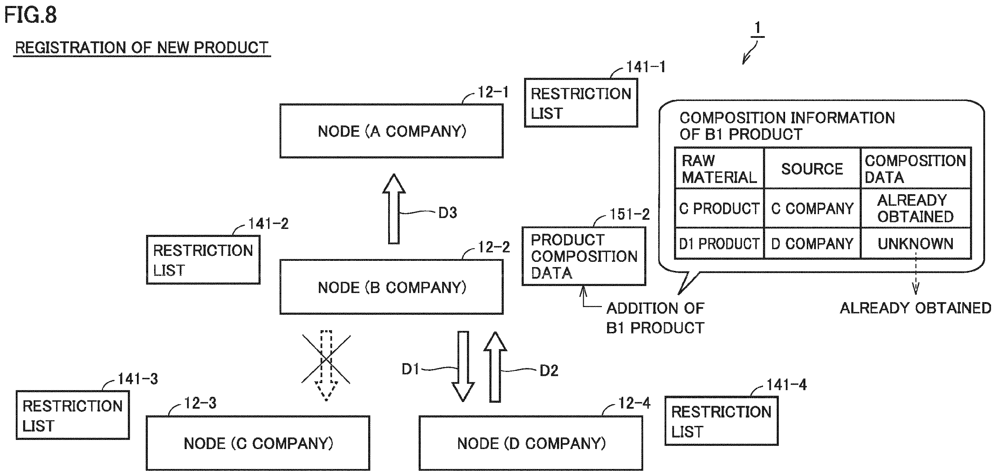

Fig. 8 is a diagram for illustrating a case of registration of information on a new product. Fig. 8 shows a case of addition of the new product by the B company. It is assumed that a B1 product is added as the new product and composition data of the B1 product is added to product composition data 151-2. Then, it is assumed that the B1 product includes the C product supplied by the C company and a D1 product supplied by the D company. Since the C product is included also in the B product which is an existing product, the B company has already obtained the information on the subject substance contained in the C product. On the other hand, the D1 product is a product newly supplied from the D company, and the B company does not have information on the subject substance contained in the D1 product. In order to give the information on the subject substance contained in the B1 product to the A company that purchases the B1 product, the B company should obtain from the D company, information on the subject substance contained in the D1 product (composition data of the D1 product).

Node 12-2 of the B company generates transaction data for making an inquiry about the D1 product to node 12-4 of the D company. The transaction data includes, for example, information on a sender (the B company) of the transaction data, information on a destination (the D company) of the transaction data, a type of a transaction, model number information for identifying the D1 product, and the inquiry purpose. Since the inquiry is as described in <(2) Case of Registration of Inquiry> described above, description will not be repeated. Node 12-2 of the B company transmits the generated transaction data to node 12-4 of the D company (an arrow D1). Since information on the subject substance contained in the C product has already been obtained, node 12-2 of the B company does not make an inquiry to node 12-3 of the C company.

Node 12-4 of the D company verifies the transaction data received from node 12-2 of the B company, and thereafter when node 12-4 sees no problem in a result of verification of the transaction data, node 12-4 approves the transaction data. Since there is no company upstream from the D company itself in connection with the D1 product, node 12-4 of the D company prepares composition data of the D1 product as answer data 143-4. Then, node 12-4 of the D company transmits transaction data reporting prepared answer data 143-4 to node 12-2 of the B company (an arrow D2).

Node 12-2 of the B company verifies the transaction data received from node 12-4 of the D company, and thereafter when node 12-2 sees no problem in a result of verification of the transaction data, node 12-2 approves the transaction data. Node 12-2 of the B company uses information on the subject substance contained in the D1 product to update product composition data 151-2 of the B1 product. Then, for reporting to the A company, composition data of the B1 product on which information on the new subject substance contained in the D1 product has been reflected is prepared as answer data 143-2. On this answer data 143-2, information on the subject substance contained in both of the C product and the D1 product included in the B1 product is reflected. Therefore, node 12-2 of the B company finalizes prepared answer data 143-2 as a complete report and transmits transaction data reporting prepared answer data 143-2 to node 12-1 of the A company (an arrow D3). Answer data 143-2 does not include information for identifying the C company and the D company. Node 12-1 of the A company verifies the transaction data received from node 12-2 of the B company, and thereafter when node 12-1 sees no problem in a result of verification of the transaction data, node 12-1 approves the transaction data. A series of processing for addition of the new product is thus completed.

If a C product is also a product newly supplied from the C company, node 12-2 of the B company obtains information on the subject substance contained in the C product from the C company as in the case of the D1 product. In this case, node 12-2 of the B company waits for both of the information on the subject substance contained in the C product and the information on the subject substance contained in the D1 product to be ready, and prepares as answer data 143-2, the composition data of the B1 product on which both of these pieces of information are reflected. At the time of registration of information on the new product, the A company does not hold information on the B1 product. Therefore, even when the A company receives a partially completed report about the B1 product from the B company, it may be difficult for the A company to manage the information. Therefore, at the time of registration of information of the new product, node 12-2 of the B company does not give a partially completed report about the B1 product but gives a complete report.

### <Functional Block of Node>

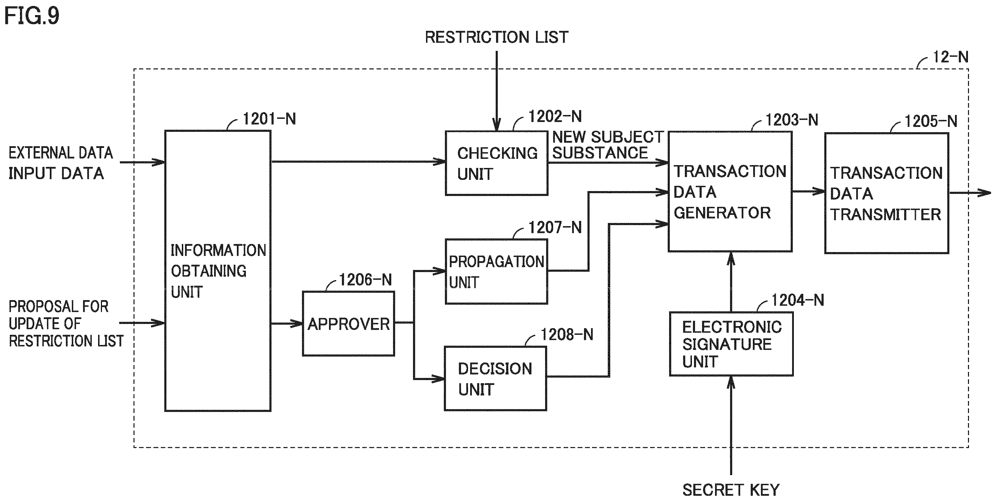

Fig. 9 is a functional block diagram of controller 110-N (node 12-N) relating to a function to update restriction list 141-N. Fig. 9 shows a function of node 12-N to request another node to add a subject substance to restriction list 141-N and a function to respond to a request for addition of the subject substance to restriction list 141-N received from another node. Referring to Fig. 9, node 12-N includes an information obtaining unit 1201-N, a checking unit 1202-N, a transaction data generator 1203-N, an electronic signature unit 1204-N, a transaction data transmitter 1205-N, an approver 1206-N, a propagation unit 1207-N, and a decision unit 1208-N.

### <<Functional Block of Node: Function to Request for Addition of Subject Substance>>

Information obtaining unit 1201-N, checking unit 1202-N, transaction data generator 1203-N, electronic signature unit 1204-N, and transaction data transmitter 1205-N perform a function to request another node to add a subject substance to restriction list 141-N.

Information obtaining unit 1201-N obtains data on a restricted substance (external data) from the outside (a server apparatus or the like in an external group) of information management apparatus 10-N through communication apparatus 140-N. Information obtaining unit 1201-N obtains external data from the outside of information management system 1, for example, every prescribed cycle. The prescribed cycle can be set as appropriate depending on characteristics or the like of information management system 1. Information obtaining unit 1201-N obtains a request (input data) for setting an arbitrary chemical substance as the subject substance that is entered through input apparatus 170-N. A user of information management apparatus 10-N can enter a chemical substance to be managed in information management system 1 (a chemical substance to be set as the subject substance) into input apparatus 170-N and can have information obtaining unit 1201-N obtain the entered information as input data. Information obtaining unit 1201-N provides external data and/or input data to checking unit 1202-N.

Checking unit 1202-N reads restriction list 141-N from storage 160-N and checks the external data and/or the input data received from information obtaining unit 1201-N against restriction list 141-N. When the chemical substance shown in the external data and/or the input data is already included in restriction list 141-N, checking unit 1202-N discards the external data and/or the input data. When the chemical substance shown in the external data and/or the input data is not included in restriction list 141-N, checking unit 1202-N sets the chemical substance shown in the external data and/or the input data as a new subject substance, and provides information on the new subject substance to transaction data generator 1203-N.

Transaction data generator 1203-N generates transaction data that makes a proposal. The transaction data generated in this case includes, for example, information on a sender of the transaction data, information on a destination of the transaction data, a type of a transaction (addition of the subject substance), a name of the subject substance, and the CAS number of the subject substance.

Transaction data generator 1203-N obtains the electronic signature from electronic signature unit 1204-N. Then, transaction data generator 1203-N puts the electronic signature to the transaction data.

Electronic signature unit 1204-N reads the secret key from storage 150-N. Electronic signature unit 1204-N uses the secret key to generate the electronic signature. For example, electronic signature unit 1204-N generates the electronic signature by encrypting the transaction data generated by transaction data generator 1203-N with the secret key. Electronic signature unit 1204-N provides the generated electronic signature to transaction data generator 1203-N.

Transaction data generator 1203-N provides the transaction data to which the electronic signature was put to transaction data transmitter 1205-N.

Transaction data transmitter 1205-N provides a control signal for transmitting the transaction data to communication apparatus 140-N. The control signal includes an address of a node indicated in information on a destination of the transaction data. The transaction data is thus transmitted to a node of a concerned party through communication apparatus 140-N and network NW The node defined as the concerned party is a node in direct business relation, in other words, a node with a distributed ledger having a region superimposed on distributed ledger 14-N of a node itself.

### <<Functional Block of Node: Function to Respond to Request for Addition of Subject Substance>>

Information obtaining unit 1201-N, transaction data generator 1203-N, electronic signature unit 1204-N, transaction data transmitter 1205-N, approver 1206-N, propagation unit 1207-N, and decision unit 1208-N perform a function to respond to a request for addition of a subject substance to restriction list 141-N.

Information obtaining unit 1201-N obtains transaction data transmitted from another node that forms distributed ledger network 2 through communication apparatus 140-N. This transaction data is transaction data (transaction data that requests for update of restriction list 141-N) that requests for addition of the subject substance to restriction list 141-N proposed by another node. Information obtaining unit 1201-N provides the obtained transaction data to approver 1206-N.

Approver 1206-N verifies the transaction data received from information obtaining unit 1201-N, and when approver 1206-N sees no problem in a result of verification of the transaction data, approver 1206-N approves the transaction data. In verification of the transaction data, transaction data directly or indirectly approved by the transaction data may retroactively be verified, and a fact that unauthorized transaction data has not been approved may be verified. Directly approved transaction data refers to transaction data in an input state. Indirectly approved transaction data refers to transaction data in the input state of directly approved transaction data or transaction data in the input state of any transaction data linked to directly approved transaction data. A verification technique may be, for example, a verification technique using an electronic signature put to transaction data (an electronic signature by another node) or another known verification technique.

Approver 1206-N provides approved transaction data to propagation unit 1207-N. In addition, approver 1206-N provides the approved transaction data to decision unit 1208-N.

Propagation unit 1207-N determines whether or not there is a node upstream from the node itself in the supply chain, and when there is an upstream node, propagation unit 1207-N provides information indicating a destination (an upstream node) of the transaction data to transaction data generator 1203-N, together with the approved transaction data.

Transaction data generator 1203-N changes information on the sender to the node itself and changes information on the destination of the transaction data to the upstream node in the transaction data received from propagation unit 1207-N. Transaction data generator 1203-N obtains the electronic signature from electronic signature unit 1204-N. Then, transaction data generator 1203-N puts the electronic signature to the transaction data. Transaction data generator 1203-N provides the transaction data to which the electronic signature was put to transaction data transmitter 1205-N.

Transaction data transmitter 1205-N provides a control signal for transmitting the transaction data to communication apparatus 140-N. The transaction data that requests for addition of the subject substance to restriction list 141-N proposed by another node thus propagates to the upstream node. As node 12-N performs the function of propagation to the upstream node, of the transaction data that requests for addition of the subject substance to restriction list 141-N proposed by another node, the transaction data propagates to all nodes in distributed ledger network 2.

Decision unit 1208-N determines whether or not to accept (approve) processing contents shown in the transaction data approved by approver 1206-N. Specifically, decision unit 1208-N determines whether or not to add the subject substance proposed by another node to restriction list 141-N. Decision unit 1208-N determines whether or not the new subject substance addition of which to restriction list 141-N is requested is included in current restriction list 141-N (that is, it has already been approved). When the subject substance addition of which to restriction list 141-N is requested is already included in current restriction list 141-N, decision unit 1208-N determines to accept transaction data. When the subject substance addition of which to restriction list 141-N is requested is not included in current restriction list 141-N, decision unit 1208-N has display apparatus 180-N show information asking whether or not to accept (approve) transaction data and waits for an input from a user through input apparatus 170-N. When input information from the user indicates acceptance (approval of the request), decision unit 1208-N determines to accept the transaction data. When the input information from the user indicates rejection (denial of the request), decision unit 1208-N rejects acceptance of the transaction data.

When decision unit 1208-N determines to accept the transaction data, it designates a destination (a downstream node) of the transaction data to send the transaction data approved by approver 1206-N back to the downstream node which is the sender of the transaction data. Decision unit 1208-N provides information indicating the destination (downstream node) of the transaction data to transaction data generator 1203-N, together with the approved transaction data. When decision unit 1208-N rejects acceptance of the transaction data, it discards the transaction data approved by approver 1206-N.

Transaction data generator 1203-N changes information on the sender of the transaction data received from decision unit 1208-N to the node itself and changes information on the destination of the transaction data to the downstream node. Transaction data generator 1203-N obtains the electronic signature from electronic signature unit 1204-N. Then, transaction data generator 1203-N puts the electronic signature to the transaction data. Transaction data generator 1203-N provides the transaction data to which the electronic signature was put to transaction data transmitter 1205-N.

Transaction data transmitter 1205-N provides a control signal for transmitting the transaction data to communication apparatus 140-N. The transaction data is thus sent back to the downstream node. The transaction data sent back to the downstream node has the electronic signature by the downstream node and the electronic signature by node 12-N put thereto. This transaction data is held in the distributed ledgers of both of them (the distributed ledger of the downstream node and distributed ledger 14-N).

### <<Functional Block of Node: Inquiry Function>>

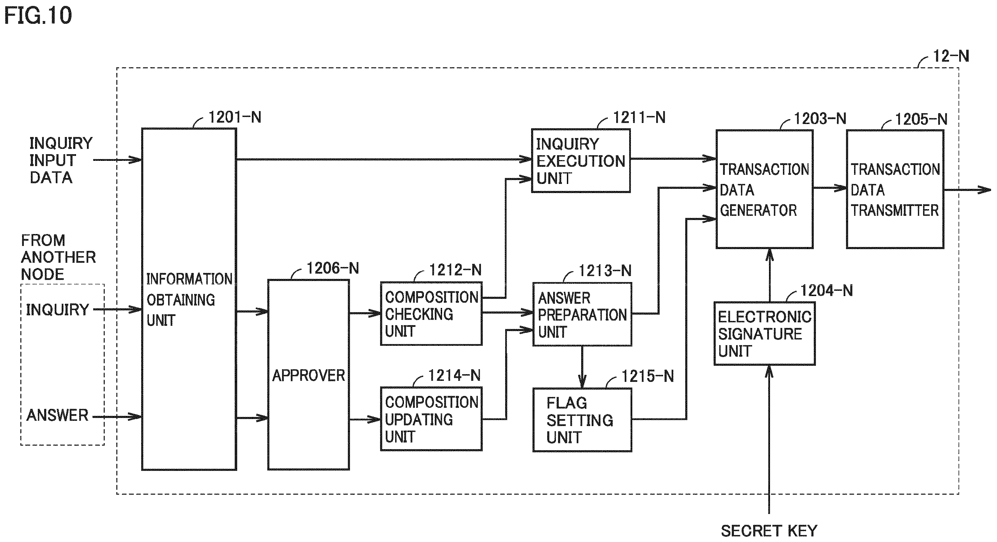

Fig. 10 is a functional block diagram of controller 110-N (node 12-N) relating to an inquiry function and an answer function. Referring to Fig. 10, node 12-N includes information obtaining unit 1201-N, transaction data generator 1203-N, electronic signature unit 1204-N, transaction data transmitter 1205-N, approver 1206-N, an inquiry execution unit 1211-N, a composition checking unit 1212-N, an answer preparation unit 1213-N, a composition updating unit 1214-N, and a flag setting unit 1215-N.

Information obtaining unit 1201-N, transaction data generator 1203-N, electronic signature unit 1204-N, transaction data transmitter 1205-N, and inquiry execution unit 1211-N perform a function to make an inquiry to another node (an upstream node).

Information obtaining unit 1201-N obtains inquiry input data entered through input apparatus 170-N. A user of information management apparatus 10-N can enter contents of an inquiry to an upstream company about the composition of a purchased product into input apparatus 170-N and have information obtaining unit 1201-N obtain the entered information as inquiry input data. The user of information management apparatus 10-N enters, for example, information on a source of an inquiry (the information management apparatus itself), information on a destination (an upstream company) of the inquiry, model number information of a product about which an inquiry is made, and information on an inquiry purpose, into an inquiry form shown on display apparatus 180-N. Such information is inquiry input data. As described above, the inquiry purpose may be selected, for example, from the "content" and "presence/absence". Information obtaining unit 1201-N provides the inquiry input data to inquiry execution unit 1211-N.

Inquiry execution unit 1211-N generates information to be conveyed to transaction data generator 1203-N based on the inquiry input data. Specifically, inquiry execution unit 1211-N extracts information on the sender (the information management apparatus itself) of transaction data, information on a destination (an upstream company from which the product about which the inquiry is made is purchased) of the transaction data, a type of a transaction (a request for disclosure of the composition), model number information of the product about which the inquiry is made, and an inquiry purpose based on the inquiry input data, and provides the extracted information to transaction data generator 1203-N.

Transaction data generator 1203-N generates transaction data from information received from inquiry execution unit 1211-N. The transaction data includes information on the sender (the information management apparatus itself) of the transaction data, information on the destination (the upstream company from which the product about which the inquiry is made is purchased) of the transaction data, a type of a transaction (a request for disclosure of the composition), model number information of the product about which the inquiry is made, and information on the inquiry purpose.

Transaction data generator 1203-N obtains the electronic signature from electronic signature unit 1204-N. Then, transaction data generator 1203-N puts the electronic signature to the transaction data. Transaction data generator 1203-N provides the transaction data to which the electronic signature was put to transaction data transmitter 1205-N.

Transaction data transmitter 1205-N provides a control signal for transmitting the transaction data to communication apparatus 140-N. An inquiry is thus sent to the upstream company from which the product about which the inquiry is made is purchased.

### <<Functional Block of Node: Function to Respond to Received Inquiry>>

Information obtaining unit 1201-N, transaction data generator 1203-N, electronic signature unit 1204-N, transaction data transmitter 1205-N, approver 1206-N, inquiry execution unit 1211-N, composition checking unit 1212-N, answer preparation unit 1213-N, and flag setting unit 1215-N perform a function to respond to a received inquiry.

Information obtaining unit 1201-N obtains transaction data which is an inquiry transmitted from another node (a node of a downstream company) that forms distributed ledger network 2 through communication apparatus 140-N. Information obtaining unit 1201-N provides the obtained transaction data to approver 1206-N.

Approver 1206-N verifies the transaction data received from information obtaining unit 1201-N, and when approver 1206-N sees no problem in a result of verification of the transaction data, approver 1206-N approves the transaction data. Since details of approver 1206-N have been described above, description thereof will not be repeated. When approver 1206-N approves the transaction data, it provides information indicating approval to composition checking unit 1212-N, together with the transaction data.

Composition checking unit 1212-N checks the composition of a product about which the inquiry is made. Composition checking unit 1212-N checks the composition of the product about which the inquiry is made, for example, by referring to product composition data 151-N stored in storage 150-N. Specifically, composition checking unit 1212-N checks whether or not there is a product (a constituent product) included in the product about which the inquiry is made. When there is a product (a constituent product) included in the product about which the inquiry is made, composition checking unit 1212-N generates data corresponding to the inquiry input data described above and provides the data to inquiry execution unit 1211-N. When there is no product (constituent product) included in the product about which the inquiry is made, composition checking unit 1212-N provides transaction data to answer preparation unit 1213-N together with information indicating that a complete report can be issued.

Inquiry execution unit 1211-N generates information to be conveyed to transaction data generator 1203-N based on the data received from composition checking unit 1212-N. Specifically, inquiry execution unit 1211-N extracts information on a sender (a node itself) of the transaction data, information on a destination (an upstream company from which the constituent product is purchased) of the transaction data, a type of a transaction (a request for disclosure of the composition), model number information of the product about which the inquiry is made, and an inquiry purpose based on the data received from composition checking unit 1212-N, and provides the extracted information to transaction data generator 1203-N. With transaction data generator 1203-N, electronic signature unit 1204-N, and transaction data transmitter 1205-N, an inquiry is thus sent to the node of the upstream company from which the constituent product is purchased.

When answer preparation unit 1213-N receives information indicating that the complete report can be issued, it prepares answer data 143-N to the inquiry by referring to and using product composition data 151-N and restriction list 141-N. In other words, answer preparation unit 1213-N prepares answer data 143-N by picking up subject substances contained in the product about which the inquiry is made. Answer preparation unit 1213-N provides prepared answer data 143-N and information on the destination of answer data 143-N to transaction data generator 1203-N.

Transaction data generator 1203-N generates transaction data from information received from answer preparation unit 1213-N. The transaction data includes information on the sender (the node itself) of the transaction data, information on the destination (a downstream company to which the product about which the inquiry is made is supplied) of the transaction data, a type of a transaction (an answer), model number information of the product about which the inquiry is made, and answer data.

Transaction data generator 1203-N obtains the electronic signature from electronic signature unit 1204-N. Then, transaction data generator 1203-N puts the electronic signature to the transaction data. Transaction data generator 1203-N provides the transaction data to which the electronic signature was put to transaction data transmitter 1205-N.

Transaction data transmitter 1205-N provides a control signal for transmitting the transaction data to communication apparatus 140-N. An answer to the inquiry is thus transmitted to the downstream company that made the inquiry.

Answer preparation unit 1213-N provides information indicating that the complete report was issued to flag setting unit 1215-N.

When flag setting unit 1215-N receives information indicating that the complete report was issued, it sets the completion flag. Flag setting unit 1215-N provides information indicating that the complete report was finished (information indicating that the flag was set) and information on the destination of the transaction data to transaction data generator 1203-N.

Transaction data generator 1203-N generates transaction data from information received from flag setting unit 1215-N. The transaction data includes information on the sender (the node itself) of the transaction data, information on the destination (a downstream company to which the product about which the inquiry is made is supplied) of the transaction data, and information indicating that the complete report was finished.

Transaction data generator 1203-N obtains the electronic signature from electronic signature unit 1204-N. Then, transaction data generator 1203-N puts the electronic signature to the transaction data. Transaction data generator 1203-N provides the transaction data to which the electronic signature was put to transaction data transmitter 1205-N.

Transaction data transmitter 1205-N provides a control signal for transmitting the transaction data to communication apparatus 140-N. Information indicating that the complete report for the inquiry was finished is thus transmitted to the downstream company that made the inquiry.

### <<Functional Block of Node: Function to Respond to Received Answer>>

Information obtaining unit 1201-N, transaction data generator 1203-N, electronic signature unit 1204-N, transaction data transmitter 1205-N, approver 1206-N, answer preparation unit 1213-N, composition updating unit 1214-N, and flag setting unit 1215-N perform a function to respond to a received answer.

Information obtaining unit 1201-N obtains transaction data that gives an answer transmitted from another node (a node of an upstream company) that forms distributed ledger network 2. Information obtaining unit 1201-N provides the obtained transaction data to approver 1206-N.

Approver 1206-N verifies the transaction data received from information obtaining unit 1201-N, and when approver 1206-N sees no problem in a result of verification of the transaction data, approver 1206-N approves the transaction data. When approver 1206-N approves the transaction data, it provides information indicating approval to composition updating unit 1214-N, together with the transaction data.

Composition updating unit 1214-N updates product composition data 151-N based on answer data included in the transaction data. Composition updating unit 1214-N provides information indicating update of product composition data 151-N to answer preparation unit 1213-N. Composition updating unit 1214-N determines whether or not a complete report can be issued to a downstream company in connection with a product of interest. In other words, composition updating unit 1214-N determines whether or not answers to the inquiry made by node 12-N to a node of an upstream company are all ready in connection with the product of interest. When the complete report can be issued to the downstream company in connection with the product of interest, composition updating unit 1214-N provides information indicating that the complete report can be issued to answer preparation unit 1213-N.

When answer preparation unit 1213-N receives information indicating update of product composition data 151-N, it prepares composition data (answer data 143-N) of the product of interest for reporting to the downstream company by referring to and using updated product composition data 151-N and restriction list 141-N. When answer preparation unit 1213-N has not received information indicating that the complete report can be issued at this time, it provides answer data 143-N as a partially completed report. When answer preparation unit 1213-N has received information indicating that the complete report can be issued, it provides answer data 143-N as the complete report. Answer preparation unit 1213-N provides prepared answer data 143-N and information on the destination of answer data 143-N to transaction data generator 1203-N. With transaction data generator 1203-N, electronic signature unit 1204-N, and transaction data transmitter 1205-N, composition data of the product of interest is thus given to the node of the downstream company to which the product of interest is supplied.

When answer preparation unit 1213-N issues the complete report, it provides information indicating that the complete report was issued to flag setting unit 1215-N. Since processing performed by flag setting unit 1215-N is as described above, description will not be repeated. Information indicating that the complete report was finished is thus sent to the downstream company.

### <Sequence Diagram: Propagation of Request for Addition of Subject Substance>

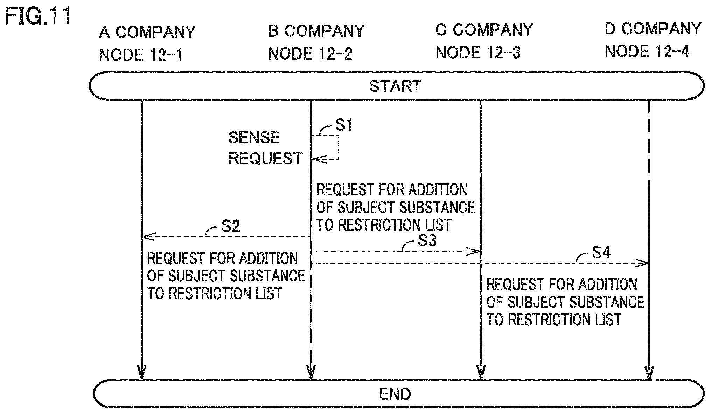

Fig. 11 is a sequence diagram showing a flow of propagation of a request for addition of a subject substance to restriction list 141-N. Processing shown in this sequence diagram is started when any of nodes 12-1 to 12-4 that form distributed ledger network 2 requests for update of restriction list 141-N. Fig. 11 shows an example in which node 12-2 of the B company first requests for addition of the subject substance to restriction list 141-N.

In S1, node 12-2 of the B company senses, for example, that the restricted substance has been added to the SVHC or that a user of information management apparatus 10-2 of the B company has performed processing for a request for addition of the subject substance.

In S2, node 12-2 of the B company requests node 12-1 of the A company to add the subject substance to restriction list 141-1.

In S3, node 12-2 of the B company requests node 12-3 of the C company to add the subject substance to restriction list 141-3.

In S4, node 12-2 of the B company requests node 12-4 of the D company to add the subject substance to restriction list 141-4.

Processing in S2 to S4 should only be performed in parallel.

As above, a request for addition of the subject substance to the restriction list from node 12-2 of the B company propagates between companies in direct business relation, and propagates to all other nodes that form distributed ledger network 2.

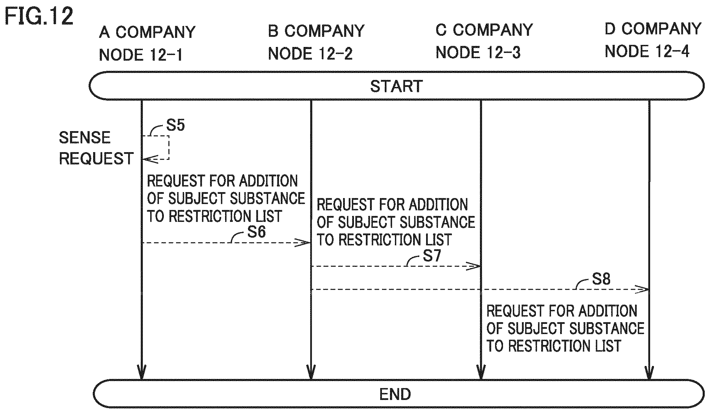

Fig. 12 is a sequence diagram showing a flow of propagation of a request for addition of a subject substance to restriction list 141-N. Fig. 12 shows an example in which node 12-1 of the A company first requests for addition of the subject substance to restriction list 141-N.

In S5, node 12-1 of the A company senses, for example, that the restricted substance has been added to the SVHC or that a user of information management apparatus 10-1 of the A company has performed processing for a request for addition of the subject substance.

In S6, node 12-1 of the A company requests node 12-2 of the B company to add the subject substance to restriction list 141-2.

In S7, node 12-2 of the B company has the request for addition of the subject substance to restriction list 141-3 propagate to node 12-3 of the C company.

In S8, node 12-2 of the B company has the request for addition of the subject substance to restriction list 141-4 propagate to node 12-4 of the D company.

Processing in S7 and S8 should only be performed in parallel.

As above, a request for addition of the subject substance to the restriction list from node 12-1 of the A company propagates between companies in direct business relation, and propagates to all other nodes that form distributed ledger network 2.

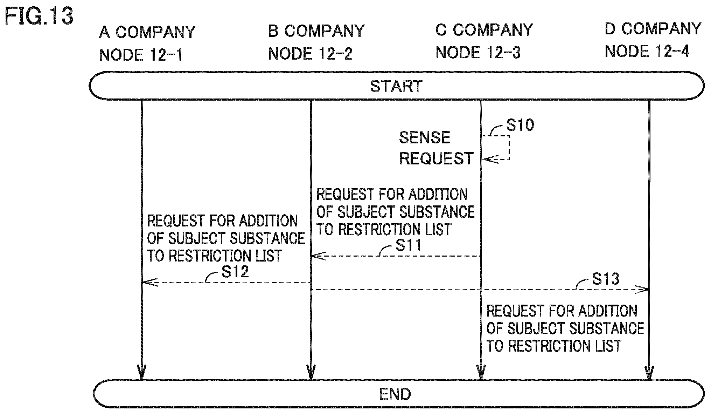

Fig. 13 is a sequence diagram showing a flow of propagation of a request for addition of a subject substance to restriction list 141-N. Fig. 13 shows an example in which node 12-3 of the C company requests for update of restriction lists 141-N of all nodes that form distributed ledger network 2.

In S10, node 12-3 of the C company senses, for example, that the restricted substance has been added to the SVHC or that a user of information management apparatus 10-3 of the C company has performed processing for a request for addition of the subject substance.

In S11, node 12-3 of the C company requests node 12-2 of the B company to add the subject substance to restriction list 141-2.

In S12, node 12-2 of the B company has the request for addition of the subject substance to restriction list 141-1 propagate to node 12-1 of the A company.

In S13, node 12-2 of the B company has the request for addition of the subject substance to restriction list 141-4 propagate to node 12-4 of the D company.

Processing in S12 and S13 should only be performed in parallel.

As above, a request for addition of the subject substance to the restriction list from node 12-3 of the C company propagates between companies in direct business relation, and propagates to all other nodes that form distributed ledger network 2.

### <Sequence Diagram: Inquiry and Answer>

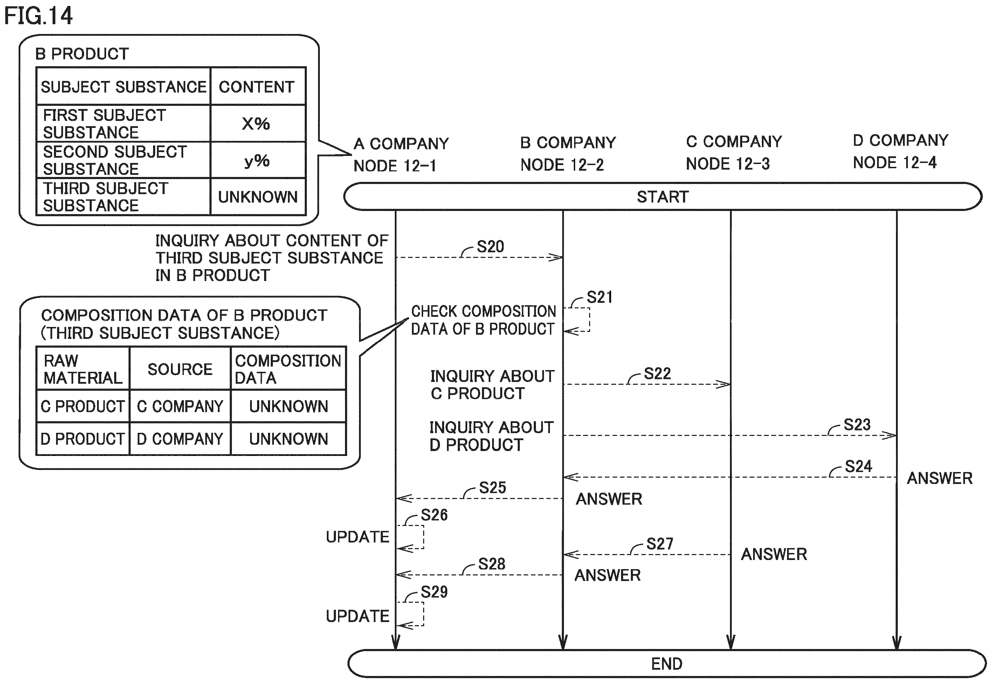

Fig. 14 is a sequence diagram showing a flow of an inquiry and an answer. Processing shown in this sequence diagram is started when any of nodes 12-1 to 12-4 that form distributed ledger network 2 makes an inquiry to an upstream company. Fig. 14 shows an example in which node 12-1 of the A company makes an inquiry to node 12-2 of the B company for the purpose of disclosure of the content of a specific subject substance (third subject substance) in the B product. Node 12-1 of the A company can make an inquiry to node 12-2 of the B company in direct business relation at arbitrary timing. A scene in which node 12-1 of the A company has already obtained composition data of the first subject substance and the second subject substance in the B product, whereas it has not obtained composition data of the third subject substance is assumed. In addition, a scene in which the B company has not yet obtained composition data of the third subject substance in the C product and the D product included in the B product is assumed.

In S20, node 12-1 of the A company transmits inquiry data 142-1 that requests for disclosure of the composition data of the B product to node 12-2 of the B company. The inquiry in S20 may be an inquiry about the content of the third subject substance in the B product.

In S21, node 12-2 of the B company reads product composition data 151-1 from storage 150-2 and checks the composition data of the B product. Node 12-2 of the B company thus recognizes that it has not yet obtained composition data of the third subject substance in the C product and the D product.

In S22, node 12-2 of the B company transmits inquiry data 142-2 that requests for disclosure of the composition data of the C product to node 12-3 of the C company. The inquiry in S22 may be an inquiry about the content of the third subject substance in the C product.

In S23, node 12-2 of the B company transmits inquiry data 142-2 that requests for disclosure of the composition data of the D product to node 12-4 of the D company. The inquiry in S23 may be an inquiry about the content of the third subject substance in the D product.

Node 12-2 of the B company performs processing in S22 and S23 in parallel.

In S24, node 12-4 of the D company generates composition data (answer data 143-4) of the D product based on product composition data 151-4. Node 12-4 of the D company gives the composition data of the D product as the answer to node 12-2 of the B company. Node 12-4 of the D company may give the content of the third subject substance in the D product as the answer to node 12-2 of the B company.

In S25, node 12-2 of the B company updates product composition data 151-2 of the B product of the node itself based on answer data 143-4 from node 12-4 of the D company, and generates composition data (answer data 143-2) of the B product based on updated product composition data 151-2. Node 12-2 of the B company gives answer data 143-2 as the partially completed report to node 12-1 of the A company.

In S26, node 12-1 of the A company updates product composition data 151-1 of the B product of the node itself based on answer data 143-2 from node 12-2 of the B company.

In S27, node 12-3 of the C company generates composition data (answer data 143-3) of the C product based on product composition data 151-3. Node 12-3 of the C company gives the composition data of the C product as the answer to node 12-2 of the B company. Node 12-3 of the C company may give the content of the third subject substance in the C product as the answer to node 12-2 of the B company.

In S28, node 12-2 of the B company updates product composition data 151-2 of the B product of the node itself based on answer data 143-3 from node 12-3 of the C company. Pieces of composition data on the third subject substance in the B product are thus all ready. Node 12-2 of the B company generates composition data (answer data 143-2) of the B product based on updated product composition data 151-2 of the B product. Node 12-2 of the B company gives answer data 143-2 as the complete report to node 12-1 of the A company. When node 12-2 of the B company issues the complete report, it sets the completion flag.

In S29, node 12-1 of the A company updates product composition data 151-1 of the B product of the node itself based on the answer from node 12-2 of the B company.

As above, the report from node 12-2 of the B company to node 12-1 of the A company (the partially completed report and the complete report) does not include information (for example, a name or the like) on the C company and the D company. The B company can thus appropriately give necessary information (composition data of the B product) to the A company while it conceals the upstream company in the supply chain of the B product.

### <Sequence Diagram: Registration of New Product>

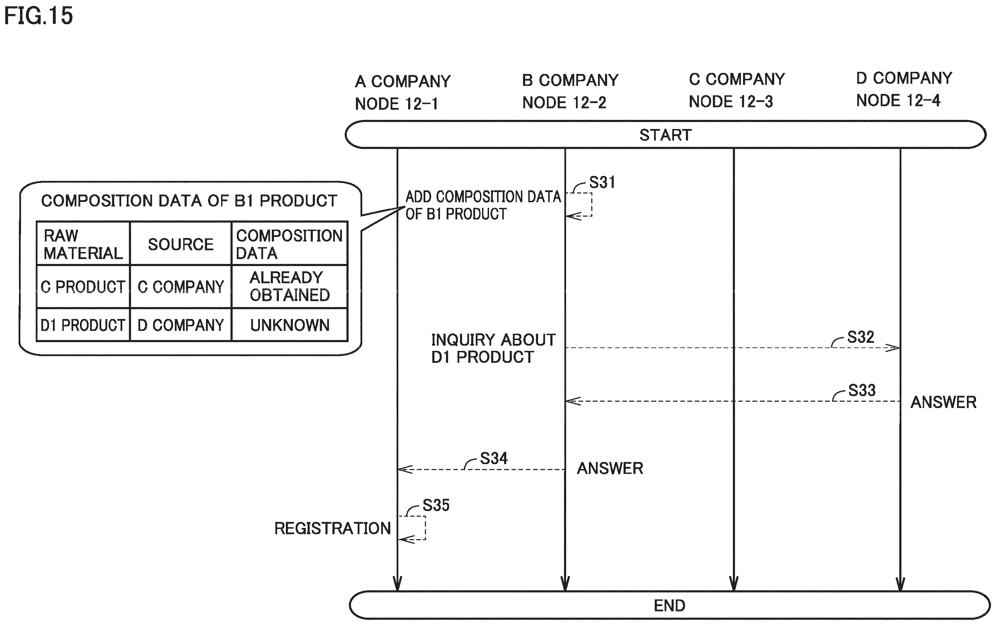

Fig. 15 is a sequence diagram showing a flow of registration of a new product. Processing shown in this sequence diagram is started when any of nodes 12-1 to 12-4 that form distributed ledger network 2 adds composition data of the new product to product composition data 151-N of the node itself. In Fig. 15, a scene in which composition data of the B1 product which is the new product of the B company is added to product composition data 151-2 in information management apparatus 10-2 of the B company is assumed. The B1 product includes the C product and the D1 product. It is assumed that node 12-2 of the B company has already obtained composition data of the C product, whereas it has not yet obtained composition data of the D1 product.

In S31, node 12-2 of the B company senses addition of composition data of the B1 product to product composition data 151-2 stored in storage 150-2 of information management apparatus 10-2. Node 12-2 of the B company recognizes that it has already obtained composition data of the C product included in the B1 product, whereas it has not yet obtained composition data of the D1 product, by referring to product composition data 151-2.

In S32, node 12-2 of the B company prepares inquiry data 142-2 that makes an inquiry about composition data of the D1 product and transmits inquiry data 142-2 to node 12-4 of the D company.

In S33, node 12-4 of the D company generates composition data (answer data 143-4) of the D1 product and transmits answer data 143-4 to node 12-2 of the B company.

In S34, node 12-2 of the B company updates composition data of the B1 product based on answer data 143-4 from node 12-4 of the D company and updates product composition data 151-2. Pieces of composition data of the B1 product are thus all ready. Node 12-2 of the B company generates composition data (answer data 143-2) of the B1 product based on updated product composition data 151-2 of the B1 product. Node 12-2 of the B company transmits answer data 143-2 to node 12-1 of the A company.

In S35, node 12-1 of the A company adds the composition data of the B1 product to product composition data 151-1 based on answer data 143-2 from node 12-2 of the B company and updates product composition data 151-1.

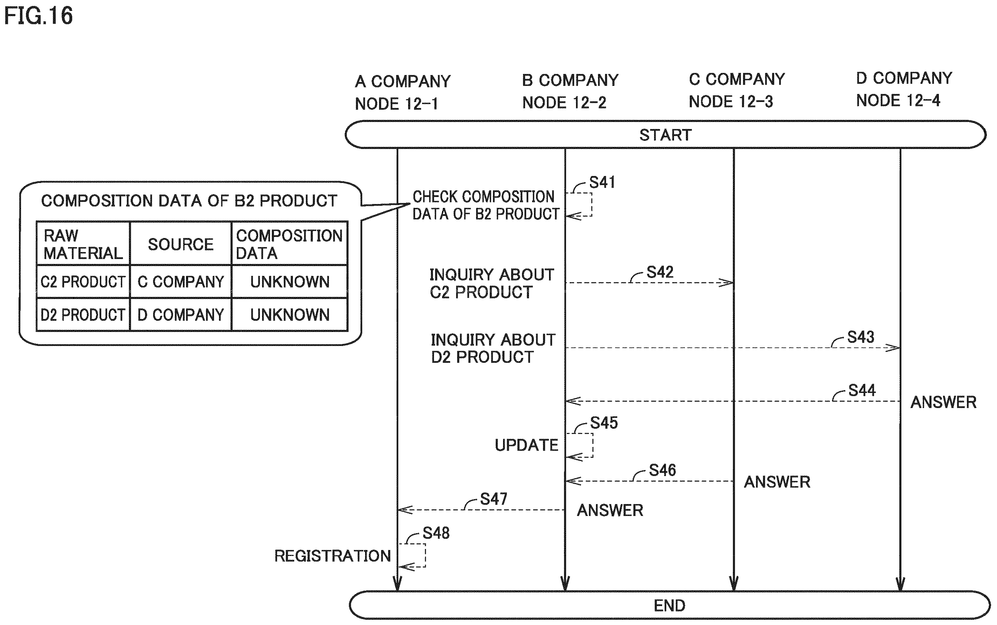

Fig. 16 is a sequence diagram showing a flow of registration of a new product. In Fig. 16, a scene in which composition data of a B2 product which is a new product of the B company is added to product composition data 151-2 in information management apparatus 10-2 of the B company is assumed. The B2 product includes a C2 product and a D2 product. A difference from Fig. 15 resides in that node 12-2 of the B company has obtained neither of composition data of the C2 product and composition data of the D2 product.

In S41, node 12-2 of the B company senses addition of composition data of the B2 product to product composition data 151-2 stored in storage 150-2 of information management apparatus 10-2. Node 12-2 of the B company recognizes that it has not yet obtained composition data of the C2 product and the D2 product included in the B2 product, by referring to product composition data 151-2.

In S42, node 12-2 of the B company prepares inquiry data 142-2 that makes an inquiry about composition data of the C2 product and transmits inquiry data 142-2 to node 12-3 of the C company.

In S43, node 12-2 of the B company prepares inquiry data 142-2 that makes an inquiry about composition data of the D2 product and transmits inquiry data 142-2 to node 12-4 of the D company.

Node 12-2 of the B company performs processing in S42 and S43 in parallel.

In S44, node 12-4 of the D company generates composition data (answer data 143-4) of the D2 product and transmits answer data 143-4 to node 12-2 of the B company.

In S45, node 12-2 of the B company updates composition data of the B2 product based on answer data 143-4 from node 12-4 of the D company and updates product composition data 151-2. At this time point, answers to the inquiry have not been all ready, and hence node 12-2 of the B company waits until all answers are ready.

In S46, node 12-3 of the C company generates composition data (answer data 143-3) of the C2 product and transmits answer data 143-3 to node 12-2 of the B company.

In S47, node 12-2 of the B company updates composition data of the B2 product based on answer data 143-3 from node 12-3 of the C company and updates product composition data 151-2. At this time point, all answers are ready and pieces of composition data of the B2 product are all ready. Node 12-2 of the B company generates composition data (answer data 143-2) of the B2 product based on updated product composition data 151-2 of the B2 product. Node 12-2 of the B company transmits answer data 143-2 to node 12-1 of the A company.

In S48, node 12-1 of the A company adds composition data of the B2 product to product composition data 151-1 based on the answer from node 12-2 of the B company and updates product composition data 151-1.

As above, the report from node 12-2 of the B company to node 12-1 of the A company does not include information (for example, a name or the like) on the C company and the D company. The B company can thus appropriately give necessary information to the A company while it conceals the upstream company in the supply chain of the B2 product.

As set forth above, in information management system 1 according to the present embodiment, a chemical substance in the supply chain is managed while information is shared among information management apparatuses (nodes that form the distributed ledger network) of concerned parties in direct business relation. For example, a midstream company may not want a downstream company to which the midstream company supplies a certain product to know an upstream company from which the midstream company receives supply of a product included in the certain product. As direct sharing of information is limited to sharing among nodes of concerned parties, for example, disclosure of information such as a name of an upstream company to a downstream company can be suppressed.

By managing information on a chemical substance contained in a product based on the distributed ledger technology, information is quickly conveyed among nodes of companies. Therefore, information on the chemical substance contained in the product distributed in the supply chain can more quickly be conveyed, for example, than in management by using such means for communication as an electronic mail, telephone, or facsimile.

In information management system 1 according to the present embodiment, by forming the distributed ledger network, tamper resistance of information can be improved.

In information management system 1 according to the present embodiment, when a new subject substance is added to the restriction list, the B company which is the midstream company requests the C company and the D company which are the upstream companies to disclose information on the new subject substance contained in the purchased product (the C product and the D product). When the B company obtains an answer from at least one of the upstream companies (the C company or the D company), it prepares composition data of the B product supplied to the A company and gives the composition data to the A company as the partially completed report. Even if a report about the B product is not the complete report, the A company may desire to successively receive reports about the new subject substance when some reports are ready. Information management system 1 according to the present embodiment can successively give the A company information on the new subject substance contained in the B product by providing the partially completed report.

When the B company provides the complete report including the information on the new subject substance to the A company, it sets the completion flag indicating completion of the report. The A company can thus recognize that it has received all reports about the new subject substance.

### [Modification]

A rank indicating an allowable disclosure level may be set for information included in product composition data 151-N. For example, first and second allowable disclosure levels are set. The first allowable disclosure level refers to a level at which disclosure can be made when a substance is designated as the restricted substance (that is, for conforming to laws and regulations). The second allowable disclosure level refers to a level at which disclosure can be made when a substance is registered in restriction list 141-N.

Information indicating whether or not a substance falls under the restricted substance is set in restriction list 141-N, in association with the subject substance.

For example, it is assumed that a certain product contains a first subject substance and a second subject substance. It is assumed that the first allowable disclosure level is set for the first subject substance and the second subject substance. Then, it is assumed that the first subject substance falls under the restricted substance and the second subject substance does not fall under the restricted substance.

When node 12-N receives a request for disclosure of composition data of a certain product, it refers to restriction list 141-N. Then, node 12-N discloses composition data of the first subject substance, whereas it does not disclose composition data of the second subject substance.

Thus, conformity with the laws and regulations can appropriately be achieved while excessive disclosure of composition data of a product which is a trade secret can be suppressed.

Though an embodiment of the present invention has been described, it should be understood that the embodiment disclosed herein is illustrative and non-restrictive in every respect. The scope of the present invention is defined by the claims.

## Claims

1. An information management system (1) that manages information on a chemical substance contained in a product distributed in a supply chain with a distributed ledger technology, the information management system (1) comprising:
a first apparatus (10-1) of a first company that manufactures a first product;
a second apparatus (10-2) of a second company that supplies to the first company, a second product included in the first product;
a third apparatus (10-3) of a third company that supplies to the second company, a third product included in the second product; and
a network (NW) over which the first apparatus, the second apparatus, and the third apparatus are connected, wherein
the first apparatus, the second apparatus, and the third apparatus include a first distributed ledger (14-1), a second distributed ledger (14-2), and a third distributed ledger (14-3), respectively,
the first distributed ledger and the second distributed ledger share transaction data including information on a chemical substance contained in the second product,
the second distributed ledger and the third distributed ledger share transaction data including information on a chemical substance contained in the third product, and
the first distributed ledger and the third distributed ledger do not share transaction data, wherein
each of the first apparatus, the second apparatus, and the third apparatus is configured to be able to select a destination of transaction data,
transaction data transmitted by the first apparatus to the second apparatus and transaction data transmitted by the second apparatus to the first apparatus are stored in the first distributed ledger and the second distributed ledger,
transaction data transmitted by the second apparatus to the third apparatus and transaction data transmitted by the third apparatus to the second apparatus are stored in the second distributed ledger and the third distributed ledger,
each of the first distributed ledger (14-1), the second distributed ledger (14-2), and the third distributed ledger (14-3)includes a list (141-1 to 141-3) showing a chemical substance managed in the information management system, and
the first apparatus (10-1) is configured to transmit transaction data that requests for addition of a new chemical substance to the list of the second distributed ledger (141-2) as first request data to the second apparatus (10-2),
the second apparatus (10-2) is configured to
verify the first request data, using an electronic signature put to the first request data,
determine whether or not to add the new chemical substance to the list of the second distributed ledger (141-2) based on a result of verification of the first request data, and
when the new chemical substance is added to the list of the second distributed ledger (141-2), the second apparatus (10-2) transmits transaction data including information on the new chemical substance contained in the second product to the first apparatus (10-1).

2. The information management system according to claim 1, wherein
the list includes information showing a restricted chemical substance including at least one of a restricted chemical substance designated as a substance of very high concern and a chemical substance designated in a global automotive declarable substance list.

3. The information management system according to claim 2, wherein
the first apparatus (10-1) is configured to communicate with a server apparatus in a group that publishes the restricted substance on the Internet, and
the first apparatus (10-1) is configured to transmit the first request data to the second apparatus when the first apparatus (10-1) senses that the new restricted substance has been added by obtaining information on the restricted substance from the server apparatus in a prescribed cycle.

4. The information management system according to any one of claims 1 to 3, wherein
the second apparatus (10-2) is configured to transmit transaction data that requests for addition of the new chemical substance to the list of the third distributed ledger (141-3) as second request data to the third apparatus (10-3) in response to the reception of the first request data, and
when the new chemical substance is added to the list of the second distributed ledger (141-3) and when the second apparatus (10-2) has not received from the third apparatus (10-3), information on the new chemical substance contained in the third product after transmitting the second request data, the second apparatus (10-2) transmits to the third apparatus (10-3), transaction data including a request for disclosing the information on the new chemical substance contained in the third product.

5. The information management system according to any one of claims 1 to 4, wherein
the second apparatus (10-2) transmits transaction data that requests for addition of the new chemical substance to the list of the third distributed ledger (141-3) as second request data to the third apparatus (10-3) in response to the reception of the first request data,
the third apparatus (10-3) is configured to
verify the second request data, using an electronic signature put to the second request data,
determine whether or not to add the new chemical substance to the list of the third distributed ledger (141-3) based on a result of verification of the second request data, and
when the new chemical substance is added to the list of the third distributed ledger (141-3), the third apparatus transmits transaction data including information on the new chemical substance contained in the third product to the second apparatus (10-2), and
when the second apparatus (10-2) receives from the third apparatus (10-3), information on the new chemical substance contained in the third product, the second apparatus (10-2) transmits to the first apparatus (10-1), transaction data including the information on the new chemical substance contained in the second product.

6. The information management system according to any one of claims 1 to 5, further comprising a fourth apparatus (10-4) of a fourth company that supplies a fourth product included in the second product to the second company, wherein
the fourth apparatus includes a fourth distributed ledger (14-4) where transaction data including information on a chemical substance contained in the fourth product is held,
the second distributed ledger and the fourth distributed ledger share the transaction data including the information on the chemical substance contained in the fourth product,
transaction data transmitted by the second apparatus to the fourth apparatus and transaction data transmitted by the fourth apparatus to the second apparatus are stored in the second distributed ledger and the fourth distributed ledger,
in addition of the new chemical substance to the list,
when the second apparatus receives first transaction data including information on the new chemical substance contained in the third product, the second apparatus transmits to the first apparatus, second transaction data that includes the information, updated based on the first transaction data, on the new chemical substance contained in the second product, and
when the second apparatus receives third transaction data including information on the new chemical substance contained in the fourth product, the second apparatus transmits to the first apparatus, fourth transaction data that includes the information, updated based on the third transaction data, on the new chemical substance contained in the second product.

7. The information management system according to claim 6, wherein
when the second apparatus transmits to the first apparatus, transaction data that includes the information on the new chemical substance contained in the second product and is updated based on both of the information on the new chemical substance contained in the third product and the information on the new chemical substance contained in the fourth product, the second apparatus transmits to the first apparatus, transaction data indicating completion of a report on the second product to the first apparatus.

## Patentansprüche

1. Informationsverwaltungssystem (1), das Informationen über einen chemischen Stoff verwaltet, der in einem Produkt enthalten ist, das in einer Lieferkette mit einer Distributed-Ledger-Technologie verteilt wird, wobei das Informationsverwaltungssystem (1) umfasst:
eine erste Einrichtung (10-1) eines ersten Unternehmens, das ein erstes Produkt herstellt;
eine zweite Einrichtung (10-2) eines zweiten Unternehmens, das dem ersten Unternehmen ein zweites Produkt liefert, das in dem ersten Produkt enthalten ist;
eine dritte Einrichtung (10-3) eines dritten Unternehmens, das dem zweiten Unternehmen ein drittes Produkt liefert, das in dem zweiten Produkt enthalten ist; und
ein Netzwerk (NW), über das die erste Einrichtung, die zweite Einrichtung und die dritte Einrichtung verbunden sind, wobei
die erste Einrichtung, die zweite Einrichtung und die dritte Einrichtung ein erstes verteiltes Buch (14-1), ein zweites verteiltes Buch (14-2) bzw. ein drittes verteiltes Buch (14-3) beinhalten,
das erste verteilte Buch und das zweite verteilte Buch Transaktionsdaten austauschen, die Informationen über einen in dem zweiten Produkt enthaltenen chemischen Stoff beinhalten,
das zweite verteilte Buch und das dritte verteilte Buch Transaktionsdaten austauschen, die Informationen über einen in dem dritten Produkt enthaltenen chemischen Stoff beinhalten, und
das erste verteilte Buch und das dritte verteilte Buch keine Transaktionsdaten austauschen, wobei
jede der ersten Einrichtung, der zweiten Einrichtung und der dritten Einrichtung dazu konfiguriert ist, ein Ziel für Transaktionsdaten auszuwählen,
Transaktionsdaten, die von der ersten Einrichtung an die zweite Einrichtung übertragen werden, und Transaktionsdaten, die von der zweiten Einrichtung an die erste Einrichtung übertragen werden, in dem ersten verteilten Buch und in dem zweiten verteilten Buch gespeichert werden,
Transaktionsdaten, die von der zweiten Einrichtung an die dritte Einrichtung übertragen werden, und Transaktionsdaten, die von der dritten Einrichtung an die zweite Einrichtung übertragen werden, in dem zweiten verteilten Buch und in dem dritten verteilten Buch gespeichert werden,
jedes des ersten verteilten Buchs (14-1), des zweiten verteilten Buchs (14-2) und des dritten verteilten Buchs (14-3) eine Liste (141-1 bis 141-3) beinhaltet, die einen in dem Informationsverwaltungssystem verwalteten chemischen Stoff zeigt, und
die erste Einrichtung (10-1) dazu konfiguriert ist, Transaktionsdaten zu übertragen, die das Hinzufügen eines neuen chemischen Stoffs in die Liste des zweiten verteilten Buchs (141-2) als erste Anforderungsdaten an die zweite Einrichtung (10-2) anfordern,
die zweite Einrichtung (10-2) konfiguriert ist, zum:
Verifizieren der ersten Anforderungsdaten unter Verwendung einer elektronischen Signatur, die den ersten Anforderungsdaten beigefügt wurde,
Bestimmen, ob der neue chemische Stoff zu der Liste des zweiten verteilten Buchs (141-2) hinzugefügt werden soll oder nicht, auf Grundlage eines Ergebnisses der Verifizierung der ersten Anforderungsdaten und
wenn der neue chemische Stoff zu der Liste des zweiten verteilten Buchs (141-2) hinzugefügt wird, die zweite Einrichtung (10-2) Transaktionsdaten, die Informationen über den neuen chemischen Stoff beinhalten, der in dem zweiten Produkt enthalten ist, an die erste Einrichtung (10-1) überträgt.

2. Informationsverwaltungssystem nach Anspruch 1, wobei
die Liste Informationen beinhaltet, die einen eingeschränkten chemischen Stoff zeigen, der wenigstens eines von einem eingeschränkten chemischen Stoff, der als ein besonders besorgniserregender Stoff ausgewiesen ist, und einem chemischen Stoff beinhaltet, der in einer globalen Liste deklarierbarer Stoffe für Kraftfahrzeuge ausgewiesen ist.

3. Informationsverwaltungssystem nach Anspruch 2, wobei
die erste Einrichtung (10-1) dazu konfiguriert ist, mit einer Servereinrichtung in einer Gruppe zu kommunizieren, die den eingeschränkten Stoff im Internet veröffentlicht, und
die erste Einrichtung (10-1) dazu konfiguriert ist, die ersten Anforderungsdaten an die zweite Einrichtung zu übertragen, wenn die erste Einrichtung (10-1) erkennt, dass der neue eingeschränkte Stoff hinzugefügt wurde, indem sie Informationen über den eingeschränkten Stoff von der Servereinrichtung in einem vorgeschriebenen Zyklus erhält.

4. Informationsverwaltungssystem nach einem der Ansprüche 1 bis 3, wobei
die zweite Einrichtung (10-2) dazu konfiguriert ist, Transaktionsdaten, die das Hinzufügen des neuen chemischen Stoffs zu der Liste des dritten verteilten Buchs (141-3) anfordern, als zweite Anforderungsdaten an die dritte Einrichtung (10-3) als Reaktion auf den Empfang der ersten Anforderungsdaten zu übertragen, und
wenn der neue chemische Stoff zu der Liste des zweiten verteilten Buchs (141-3) hinzugefügt wird und wenn die zweite Einrichtung (10-2) von der dritten Einrichtung (10-3) keine Informationen über den neuen chemischen Stoff, der in dem dritten Produkt enthalten ist, nach dem Übertragen der zweiten Anforderungsdaten empfangen hat, die zweite Einrichtung (10-2) Transaktionsdaten an die dritte Einrichtung (10-3) überträgt, die eine Anforderung zum Offenbaren der Informationen über den neuen chemischen Stoff, der in dem dritten Produkt enthalten ist, beinhalten.

5. Informationsverwaltungssystem nach einem der Ansprüche 1 bis 4, wobei
die zweite Einrichtung (10-2) Transaktionsdaten, die das Hinzufügen des neuen chemischen Stoffs zu der Liste des dritten verteilten Buchs (141-3) anfordern, als zweite Anforderungsdaten an die dritte Einrichtung (10-3) als Reaktion auf den Empfang der ersten Anforderungsdaten überträgt,
die dritte Einrichtung (10-3) konfiguriert ist, zum
Verifizieren der zweiten Anforderungsdaten unter Verwendung einer elektronischen Signatur, die den zweiten Anforderungsdaten beigefügt wurde,
Bestimmen, ob der neue chemische Stoff zu der Liste des dritten verteilten Buchs (141-3) hinzugefügt werden soll oder nicht, auf Grundlage eines Ergebnisses der Verifizierung der zweiten Anforderungsdaten und
wenn der neue chemische Stoff zu der Liste des dritten verteilten Buchs (141-3) hinzugefügt wird, die dritte Einrichtung Transaktionsdaten, die Informationen über den neuen chemischen Stoff beinhalten, der in dem dritten Produkt enthalten ist, an die zweite Einrichtung (10-2) überträgt und
wenn die zweite Einrichtung (10-2) von der dritten Einrichtung (10-3) Informationen über den neuen chemischen Stoff, der in dem dritten Produkt enthalten ist, empfängt, die zweite Einrichtung (10-2) Transaktionsdaten an die erste Einrichtung (10-1) überträgt, die die Informationen über den neuen chemischen Stoff, der in dem zweiten Produkt enthalten ist, beinhalten.

6. Informationsverwaltungssystem nach einem der Ansprüche 1 bis 5, das ferner eine vierte Einrichtung (10-4) eines vierten Unternehmens umfasst, das ein viertes Produkt, das in dem zweiten Produkt enthalten ist, an das zweite Unternehmen liefert, wobei
die vierte Einrichtung ein viertes verteiltes Buch (14-4) umfasst, in dem Transaktionsdaten gehalten werden, die Informationen über einen in dem vierten Produkt enthaltenen chemischen Stoff beinhalten,
das zweite verteilte Buch und das vierte verteilte Buch die Transaktionsdaten, die die Informationen über den in dem vierten Produkt enthaltenen chemischen Stoff beinhalten, austauschen,
die von der zweiten Einrichtung an die vierte Einrichtung übertragenen Transaktionsdaten und die von der vierten Einrichtung an die zweite Einrichtung übertragenen Transaktionsdaten in dem zweiten verteilten Buch und in dem vierten verteilten Buch gespeichert werden,
zusätzlich zu dem neuen chemischen Stoff in der Liste,
wenn die zweite Einrichtung erste Transaktionsdaten empfängt, die Informationen über den in dem dritten Produkt enthaltenen neuen chemischen Stoff beinhalten, die zweite Einrichtung an die erste Einrichtung zweite Transaktionsdaten überträgt, die die auf Grundlage der ersten Transaktionsdaten aktualisierten Informationen über den in dem zweiten Produkt enthaltenen neuen chemischen Stoff beinhalten, und
wenn die zweite Einrichtung dritte Transaktionsdaten empfängt, die Informationen über den in dem vierten Produkt enthaltenen neuen chemischen Stoff beinhalten, die zweite Einrichtung an die erste Einrichtung vierte Transaktionsdaten überträgt, die die auf Grundlage der dritten Transaktionsdaten aktualisierten Informationen über den in dem zweiten Produkt enthaltenen neuen chemischen Stoff beinhalten.

7. Informationsverwaltungssystem nach Anspruch 6, wobei
wenn die zweite Einrichtung an die erste Einrichtung Transaktionsdaten überträgt, die die Informationen über den neuen chemischen Stoff beinhalten, die in dem zweiten Produkt enthalten ist, und die auf Grundlage sowohl der Informationen über den neuen chemischen Stoff, der in dem dritten Produkt enthalten ist, als auch der Informationen über den neuen chemischen Stoff, der in dem vierten Produkt enthalten ist, aktualisiert werden, die zweite Einrichtung an die erste Einrichtung Transaktionsdaten überträgt, die den Abschluss eines Berichts über das zweite Produkt an die erste Einrichtung anzeigen.

## Revendications

1. Système de gestion d'informations (1) qui gère des informations relatives à une substance chimique contenue dans un produit distribué dans une chaîne d'approvisionnement avec une technologie de registres distribués, le système de gestion d'informations (1) comprenant :
un premier appareil (10-1) d'une première entreprise qui fabrique un premier produit ;
un deuxième appareil (10-2) d'une deuxième entreprise qui fournit à la première entreprise un deuxième produit compris dans le premier produit ;
un troisième appareil (10-3) d'une troisième entreprise qui fournit à la deuxième entreprise un troisième produit compris dans le deuxième produit ; et
un réseau (NW) sur lequel le premier appareil, le deuxième appareil, et le troisième appareil sont connectés, dans lequel
le premier appareil, le deuxième appareil, et le troisième appareil comportent respectivement un premier registre distribué (14-1), un deuxième registre distribué (14-2), et un troisième registre distribué (14-3),
le premier registre distribué et le deuxième registre distribué partagent des données de transaction comportant des informations relatives à une substance chimique contenue dans le deuxième produit,
le deuxième registre distribué et le troisième registre distribué partagent des données de transaction comportant des informations relatives à une substance chimique contenue dans le troisième produit, et
le premier registre distribué et le troisième registre distribué ne partagent pas de données de transaction, dans lequel
chacun du premier appareil, du deuxième appareil, et du troisième appareil est configuré pour pouvoir sélectionner une destination de données de transaction,
des données de transaction transmises par le premier appareil au deuxième appareil et des données de transaction transmises par le deuxième appareil au premier appareil sont stockées dans le premier registre distribué et le deuxième registre distribué,
des données de transaction transmises par le deuxième appareil au troisième appareil et des données de transaction transmises par le troisième appareil au deuxième appareil sont stockées dans le deuxième registre distribué et le troisième registre distribué,
chacun du premier registre distribué (14-1), du deuxième registre distribué (14-2), et du troisième registre distribué (14-3) comporte une liste (141-1 à 141-3) indiquant une substance chimique gérée dans le système de gestion d'informations, et
le premier appareil (10-1) est configuré pour transmettre des données de transaction qui demandent l'ajout d'une nouvelle substance chimique à la liste du deuxième registre distribué (141-2) en tant que premières données de demande au deuxième appareil (10-2),
le deuxième appareil (10-2) est configuré pour
vérifier les premières données de demande à l'aide d'une signature électronique apposée sur les premières données de demande,
déterminer s'il faut ou non ajouter la nouvelle substance chimique à la liste du deuxième registre distribué (141-2) en fonction d'un résultat de vérification des premières données de demande, et
lorsque la nouvelle substance est ajoutée à la liste du deuxième registre distribué (141-2), le deuxième appareil (10-2) transmet des données de transaction comportant des informations relatives à la nouvelle substance chimique contenue dans le deuxième produit au premier appareil (10-1).

2. Système de gestion d'informations selon la revendication 1, dans lequel
la liste comporte des informations indiquant une substance chimique soumise à restriction comportant une substance chimique soumise à restriction désignée comme substance de très grande préoccupation et/ou une substance chimique désignée dans une liste mondiale de substances déclarables pour l'automobile.

3. Système de gestion d'informations selon la revendication 2, dans lequel
le premier appareil (10-1) est configuré pour communiquer avec un appareil serveur dans un groupe qui publie la substance soumise à restriction sur Internet, et
le premier appareil (10-1) est configuré pour transmettre les premières données de demande au deuxième appareil lorsque le premier appareil (10-1) détecte que la nouvelle substance soumise à restriction a été ajoutée en obtenant des informations relatives à la substance soumise à restriction auprès de l'appareil serveur selon un cycle prescrit.

4. Système de gestion d'informations selon l'une quelconque des revendications 1 à 3, dans lequel
le deuxième appareil (10-2) est configuré pour transmettre des données de transaction qui demandent l'ajout de la nouvelle substance chimique à la liste du troisième registre distribué (141-3) en tant que deuxièmes données de demande au troisième appareil (10-3) en réponse à la réception des premières données de demande, et
lorsque la nouvelle substance chimique est ajoutée à la liste du deuxième registre distribué (141-3) et lorsque le deuxième appareil (10-2) n'a pas reçu du troisième appareil (10-3) d'informations relatives à la nouvelle substance chimique contenue dans le troisième produit après la transmission des deuxièmes données de demande, le deuxième appareil (10-2) transmet au troisième appareil (10-3) des données de transaction comportant une demande de divulgation des informations relatives à la nouvelle substance chimique contenue dans le troisième produit.

5. Système de gestion d'informations selon l'une quelconque des revendications 1 à 4, dans lequel
le deuxième appareil (10-2) transmet des données de transaction qui demandent l'ajout de la nouvelle substance chimique à la liste du troisième registre distribué (141-3) en tant que deuxièmes données de demande au troisième appareil (10-3) en réponse à la réception des prmiéres données de demande,
le troisième appareil (10-3) est configuré pour
vérifier les deuxièmes données de demande à l'aide d'une signature électronique apposée sur les deuxièmes données de demande,
déterminer s'il faut ou non ajouter la nouvelle substance chimique à la liste du troisième registre distribué (141-3) en fonction d'un résultat de vérification des deuxièmes données de demande, et
lorsque la nouvelle substance chimique est ajoutée à la liste du troisième registre distribué (141-3), le troisième appareil transmet des données de transaction comportant des informations relatives à la nouvelle substance chimique contenue dans le troisième produit au deuxième appareil (10-2), et
lorsque le deuxième appareil (10-2) reçoit du troisième appareil (10-3) des informations relatives à la nouvelle substance chimique contenue dans le troisième produit, le deuxième appareil (10-2) transmet au premier appareil (10-1) des données de transaction comportant les informations relatives à la nouvelle substance chimique contenue dans le deuxième produit.

6. Système de gestion d'informations selon l'une quelconque des revendications 1 à 5, comprenant en outre un quatrième appareil (10-4) d'une quatrième entreprise qui fournit un quatrième produit compris dans le deuxième produit à la deuxième entreprise, dans lequel
le quatrième appareil comporte un quatrième registre distribué (14-4) dans lequel des données de transaction comportant des informations relatives à une substance chimique contenue dans le quatrième produit sont conservées,
le deuxième registre distribué et le quatrième registre distribué partagent les données de transaction comportant les informations relatives à la substance chimique contenue dans le quatrième produit,
des données de transaction transmises par le deuxième appareil au quatrième appareil et des données de transaction transmises par le quatrième appareil au deuxième appareil sont stockées dans le deuxième registre distribué et le quatrième registre distribué,
en plus de l'ajout de la nouvelle substance chimique à la liste,
lorsque le deuxième appareil reçoit de premières données de transaction comportant des informations relatives à la nouvelle substance chimique contenue dans le troisième produit, le deuxième appareil transmet au premier appareil des deuxièmes données de transaction qui comportent les informations, mises à jour en fonction des premières données de transaction, relatives à la nouvelle substance chimique contenue dans le deuxième produit, et
lorsque le deuxième appareil reçoit des troisièmes données de transaction comportant des informations relatives à la nouvelle substance chimique contenue dans le quatrième produit, le deuxième appareil transmet au premier appareil des quatrièmes données de transaction qui comportent les informations, mises à jour en fonction des troisièmes données de transaction, relatives à la nouvelle substance chimique contenue dans le deuxième produit.

7. Système de gestion d'informations selon la revendication 6, dans lequel
lorsque le deuxième appareil transmet au premier appareil des données de transaction qui comportent les informations relatives à la nouvelle substance chimique contenue dans le deuxième produit et qui sont mises à jour en fonction à la fois des informations relatives à la nouvelle substance chimique contenue dans le troisième produit et des informations relatives à la nouvelle substance chimique contenue dans le quatrième produit, le deuxième appareil transmet au premier appareil des données de transaction indiquant l'achèvement d'un rapport relatif au deuxième produit au premier appareil.
